(19) **Europäisches Patentamt**
**European Patent Office**
**Office européen des brevets**

(11) **EP 4 509 254 A1**

(12) **EUROPEAN PATENT APPLICATION**
published in accordance with Art. 153(4) EPC

(43) Date of publication:
**19.02.2025 Bulletin 2025/08**

(21) Application number: **23807408.2**

(22) Date of filing: **26.04.2023**

(51) International Patent Classification (IPC):
**B23K 9/073** (2006.01)     **B23K 9/12** (2006.01)

(52) Cooperative Patent Classification (CPC):
**B23K 9/073; B23K 9/095; B23K 9/12; B23K 9/173**

(86) International application number:
**PCT/JP2023/016545**

(87) International publication number:
**WO 2023/223798 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.05.2022 JP 2022080526**

(71) Applicant: **KABUSHIKI KAISHA KOBE SEIKO SHO (KOBE STEEL, LTD.)**
**Hyogo 651-8585 (JP)**

(72) Inventors:
• **KITAMURA, Yoshiaki**
  **Fujisawa-shi, Kanagawa 251-8551 (JP)**
• **YAMAZAKI, Kei**
  **Fujisawa-shi, Kanagawa 251-8551 (JP)**

(74) Representative: **Müller-Boré & Partner**
**Patentanwälte PartG mbB**
**Friedenheimer Brücke 21**
**80639 München (DE)**

(54) **METHOD FOR CONTROLLING GAS METAL ARC WELDING, METHOD FOR SETTING WELDING CONDITION, WELDING CONTROL DEVICE, WELDING POWER SUPPLY, WELDING SYSTEM, PROGRAM, GAS METAL ARC WELDING METHOD, AND ADDITIVE MANUFACTURING METHOD**

(57)     Provided is a method for controlling gas metal arc welding in which an excellent bead shape and an optimum penetration performance according to a situation are obtained regardless of a travel speed in welding of a thin plate. The method for controlling gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$, includes: when there are one or more cycles including an arc period and a short-circuit period within a predetermined time, a short-circuit time ratio determination step of determining a ratio of the short-circuit period to the predetermined time, and a welding condition determination step of setting or correcting a welding condition so that the ratio of the short-circuit period determined in the short-circuit time ratio determination step is at least equal to or less than a predetermined threshold value or a calculated threshold value, or equal to a predetermined target value or a calculated target value.

EP 4 509 254 A1

# FIG. 11

ROBOT CONTROL DEVICE 120

START

S1101
RECEIVE TEACHING PROGRAM, VARIOUS SET VALUES, AND INSTRUCTION FOR STARTING WELDING

S1102
START WELDING (ARC ON)

S1104
EXECUTE WELDING CONTROL

S1108
END WELDING (ARC OFF)

S1110
PROGRAM ENDS
NO
YES

END

WELDING POWER SUPPLY 140

START

S1103
RECEIVE COMMAND AND START WELDING

S1105
EXECUTE POWER SUPPLY CONTROL

S1106
MEASURE SHORT-CIRCUIT TIME

S1107
IS SHORT-CIRCUIT TIME RATIO EQUAL TO OR LESS THAN THRESHOLD VALUE OR IS EQUAL TO TARGET VALUE?
NO
YES

S1109
RECEIVE COMMAND AND END WELDING

END

**Description**

TECHNICAL FIELD

The present invention relates to a method for controlling gas metal arc welding, a method for setting a welding condition, a welding control device, a welding power supply, a welding system, a program, a gas metal arc welding method, and an additive manufacturing method, which are in an arc welding control system in which a forward feeding period $T_P$ and a backward feeding period $T_N$ of a welding wire are set as one cycle and are repeated periodically.

BACKGROUND ART

The welding of a thin plate is applied in the field of manufacturing mass-production products such as automatic vehicle parts, and the welding is mainly performed using a welding robot or an automatic welding device from the viewpoint of optimization of a production system for the purpose of shortening a welding time and reducing manpower. Welding methods used for welding the thin plate include a $CO_2$ welding method or a metal active gas (MAG) welding method that generally uses 80% Ar-20% $CO_2$ gas, but each method has its advantages and disadvantages.

For example, the $CO_2$ welding has excellent high-speed weldability and high capacity. Furthermore, the $CO_2$ welding can ensure stable penetration and porosity defects are unlikely to occur, and thus there is an advantage that the $CO_2$ welding can also be used for welding a galvanized steel sheet. On the other hand, there are disadvantages that a lot of spatter occurs, and the higher a travel speed, the larger a welding current must be, which results in deeper penetration due to the effect of excessive arc force, and thus the smaller a plate thickness, the larger a risk of burn-through.

The MAG welding has an advantage that an amount of spatter is small and the penetration is small, and thus the burn-through can be reduced when the plate thickness is small, but has a disadvantage of being inferior in high-speed weldability. This is because, in the MAG welding, when the travel speed is increased, if the welding current is increased, a droplet transfer form enters a spray transfer region, causing an arc to expand beyond a width of a molten pool, making it impossible to ensure sufficient penetration. In addition, there is a risk of frequent porosity defects occurring in the welding of a galvanized steel sheet. The MAG welding includes a welding method using a pulse current (hereinafter, also referred to as "pulse MAG welding"), which has an improvement point that the spatter can be reduced and the penetration becomes deep as compared with the MAG welding, but cannot ensure sufficient penetration unlike the $CO_2$ welding, and is inferior in high-speed weldability. The disadvantage that the porosity defects are likely to occur in the galvanized steel sheet is the same as the MAG welding.

As described above, the $CO_2$ welding and the MAG welding each have advantages and disadvantages, and in recent years, there is also a method for applying feeding speed control to these welding methods to compensate for the disadvantages of these welding methods.

For example, the technique described in Patent Literature 1 has problems with the pulsed MAG welding in that the burn-through or distortion is likely to occur, and that undercut is likely to occur in a case of high-speed welding. In order to solve the problems, Patent Literature 1 discloses that the welding wire serving as a consumable electrode is periodically fed in a predetermined cycle and amplitude alternately in forward feeding in which the welding wire is fed in a direction of an object to be welded and backward feeding in which the welding wire is fed in a direction opposite to that of the forward feeding, and a first heat input period consisting of a first heat input amount and a second heat input period consisting of a second heat input amount are periodically repeated. That is, Patent Literature 1 discloses that the first heat input period and the second heat input period each include a short-circuit period and an arc period, and when a short-circuit open is detected in the short-circuit period of the second heat input period, a welding current after the short-circuit open in the second heat input period is reduced to be lower than a welding current in the arc period of the first heat input period to cause an arc to disappear, thereby reducing heat input while maintaining a stable arc, reducing the burn-through in the welding of the thin plate, and improving gap tolerance.

CITATION LIST

PATENT LITERATURE

Patent Literature 1: WO 2017/169899

SUMMARY OF INVENTION

TECHNICAL PROBLEM

However, the technique described in Patent Literature 1 does not consider a bead appearance. Regarding the bead appearance, the wider and flatter the bead is, the better a welding quality is. However, the faster the travel speed, the more likely a bead shape is to become convex, and in particular, the $CO_2$ welding tends to produce a convex bead shape.

In addition, the technique described in Patent Literature 1 has low heat input, and thus the penetration is small, and porosity defects are likely to occur in the galvanized steel sheet. As described above, the welding of the thin plate is applied in the field of manufacturing mass-production products, and the optimization of the production system is required, and thus a welding method that can be generally applied regardless of a type of base metal is desired.

Therefore, there is a demand for a technique capable of implementing an excellent bead appearance and an optimum penetration performance according to a situation even when the travel speed becomes high.

The present invention has been made in view of the above problems, and an object of the present invention is to provide a method for controlling gas metal arc welding, a method for setting a welding condition, a welding control device, a welding power supply, a welding system, a program, a gas metal arc welding method, and an additive manufacturing method, which are capable of obtaining an excellent bead shape and an optimum penetration performance according to a situation regardless of a travel speed in welding of a thin plate.

SOLUTION TO PROBLEM

The above object of the present invention is achieved by the following configuration [1] according to a method for controlling gas metal arc welding.

[1] A method for controlling gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the method including:

when there are one or more cycles including an arc period and a short-circuit period within a predetermined time, a short-circuit time ratio determination step of determining a ratio of the short-circuit period to the predetermined time; and

a welding condition determination step of setting or correcting a welding condition so that the ratio of the short-circuit period determined in the short-circuit time ratio determination step is at least equal to or less than a predetermined threshold value or a calculated threshold value, or equal to a predetermined target value or a calculated target value.

The above object of the present invention can be achieved by the following configuration [2] according to a method for setting a welding condition.

[2] A method for setting a welding condition in gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the method including:

when there are one or more cycles including an arc period and a short-circuit period within a predetermined time, determining a ratio of the short-circuit period to the predetermined time; and

setting the welding condition so that the determined ratio of the short-circuit period is at least equal to or less than a predetermined threshold value or a calculated threshold value, or equal to a predetermined target value or a calculated target value.

The above object of the present invention can be achieved by the following configuration [3] according to a welding control device.

[3] A welding control device in gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the device including:

when there are one or more cycles including an arc period and a short-circuit period within a predetermined time, a short-circuit time ratio determination unit configured to determine a ratio of the short-circuit period to the predetermined time; and

a welding condition determination unit configured to set or correct a welding condition so that the ratio of the short-circuit period determined by the short-circuit time ratio determination unit is at least equal to or less than a predetermined threshold value or a calculated threshold value, or equal to a predetermined target value or a calculated target value.

The above object of the present invention is achieved by the following configuration [4] according to a welding power supply.

[4] A welding power supply including: the welding control device according to [3].

The above object of the present invention can be achieved by the following configuration [5] according to a welding system.

[5] A welding system including: the welding power supply according to [4].

The above object of the present invention can be achieved by the following configuration [6] according to a program.

[6] A program causing a computer of a welding system including at least a welding control device to execute a function of the welding control device, in which

in gas metal arc welding using a shielding gas containing 30% or more of $CO_2$ and using a thin plate as a material to be welded, the welding control device performs feeding and welding current control by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, and the welding control device includes:

when there are one or more cycles including an arc period and a short-circuit period within a predetermined time,

a short-circuit time ratio determination step of determining a ratio of the short-circuit period to the predetermined time; and

a welding condition determination step of setting or correcting a welding condition so that the ratio of the short-circuit period determined in the short-circuit time ratio determination step is at least equal to or less than a predetermined threshold value or a calculated threshold value, or equal to a predetermined target value or a calculated target value.

The above object of the present invention is achieved by the following configuration [7] according to a gas metal arc welding method.

[7] A metal arc welding method using a method for controlling gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the welding method including:

when there are one or more cycles including an arc period and a short-circuit period within a predetermined time, setting or correcting a welding condition so that a ratio of the short-circuit period to the predetermined time is equal to or less than a value of the following expression (1) related to a feeding speed set value FW.

$$0.007 \times FW + 0.249...(1)$$

The above object of the present invention can be achieved by the following configuration [8] according to an additive manufacturing method.

[8] An additive manufacturing method using a method for controlling gas metal arc welding, the additive manufacturing method using the gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the additive manufacturing method including:

when there are one or more cycles including an arc period and a short-circuit period within a predetermined time, setting or correcting a welding condition so that a ratio of the short-circuit period to the predetermined time is equal to or less than a value of the following expression (1) related to a feeding speed set value FW.

$$0.007 \times FW + 0.249...(1)$$

ADVANTAGEOUS EFFECTS OF INVENTION

According to the present invention, in the welding of the thin plate, even under a high-speed welding condition, a good bead shape can be obtained and optimal penetration according to a situation can be ensured, thereby contributing to improved welding quality and optimization of a production system.

BRIEF DESCRIPTION OF DRAWINGS

[FIG. 1] FIG. 1 is a schematic diagram illustrating a configuration example of a welding system according to the present embodiment.
[FIG. 2] FIG. 2 is a block diagram illustrating a schematic configuration of a power supply control unit provided in a welding power supply.
[FIG. 3] FIG. 3 is a waveform diagram illustrating a temporal change in a wire feeding speed.
[FIG. 4] FIG. 4 is a waveform diagram illustrating a temporal change in a tip position of a welding wire.
[FIG. 5] FIG. 5 is a flowchart illustrating an example of basic control of a welding current according to the present embodiment.
[FIG. 6] FIG. 6 is a diagram illustrating a control example of a current setting signal Ir that designates a current value of the welding current.
[FIG. 7] FIG. 7 is a diagram illustrating a relation between a short-circuit time ratio and a bead appearance (h/w).
[FIG. 8] FIG. 8 is a diagram illustrating a relation between the short-circuit time ratio and a penetration performance (d/w).
[FIG. 9] FIG. 9 is a graph illustrating a relation between the short-circuit time ratio and the bead appearance (h/w), which is a test result at an average feeding speed of 7 m/min and a travel speed of 100 cm/min.
[FIG. 10] FIG. 10 is a graph illustrating a relation between the short-circuit time ratio and the penetration performance (d/w), which is a test result at an average feeding speed of 7 m/min and a travel speed of 100 cm/min.
[FIG. 11] FIG. 11 is a flowchart illustrating processing operations of a robot control device and the welding power supply.
[FIG. 12] FIG. 12 is a diagram illustrating a relation between a wire feeding speed, a wire tip position, and a welding current set value for illustrating the setting of an end part position of a welding current set value $I_{P1}$ and an end part position of a welding current set value $I_{P2}$.
[FIG. 13] FIG. 13 is a diagram illustrating a relation between the wire feeding speed, the wire tip position, and the welding current set value for illustrating the setting of an end part position of a current reduction period $T_{IB}$.

DESCRIPTION OF EMBODIMENTS

Hereinafter, embodiments of a method for controlling gas metal arc welding, a method for setting a welding condition, a welding control device, a welding power supply, a welding system, a program, a gas metal arc welding method, and an additive manufacturing method according to the present invention will be described in detail with reference to the drawings.
The present embodiment is an example of a case of using a welding robot, and the welding control method according to the present invention is not limited to the configuration of the present embodiment. For example, the welding control method according to the present invention may be applied to an automatic welding device using a truck, or may be applied to a portable small welding robot.
Further, in the present embodiment, a gas metal arc welding (hereinafter, also referred to as "GMAW") method to which the welding control method according to the present invention is applied will be described, and the welding control method according to the present invention is similarly applicable to the additive manufacturing method that uses gas metal arc welding.

Here, an additive manufacturing technique utilizing the GMAW is specifically useful in a wire and arc additive manufacturing (WAAM) technique. The term "additive manufacturing" may be used in a broad sense as a term of additive manufacturing or rapid prototyping, and in the present invention, the additive manufacturing and the rapid prototyping uniformly use the term "additive manufacturing". When a method according to the present invention is utilized in the additive manufacturing technique, "welding" can be replaced with "weld", "additive manufacturing", or "additive manufacturing". For example, when treated as welding, it is called a "welding condition", and when the present invention is utilized as additive manufacturing, it can be rephrased as a "weld condition", and when treated as welding, it is called a "welding system", and when the present invention is utilized as additive manufacturing, it can be rephrased as an "additive manufacturing system".

<Outline of Welding System>

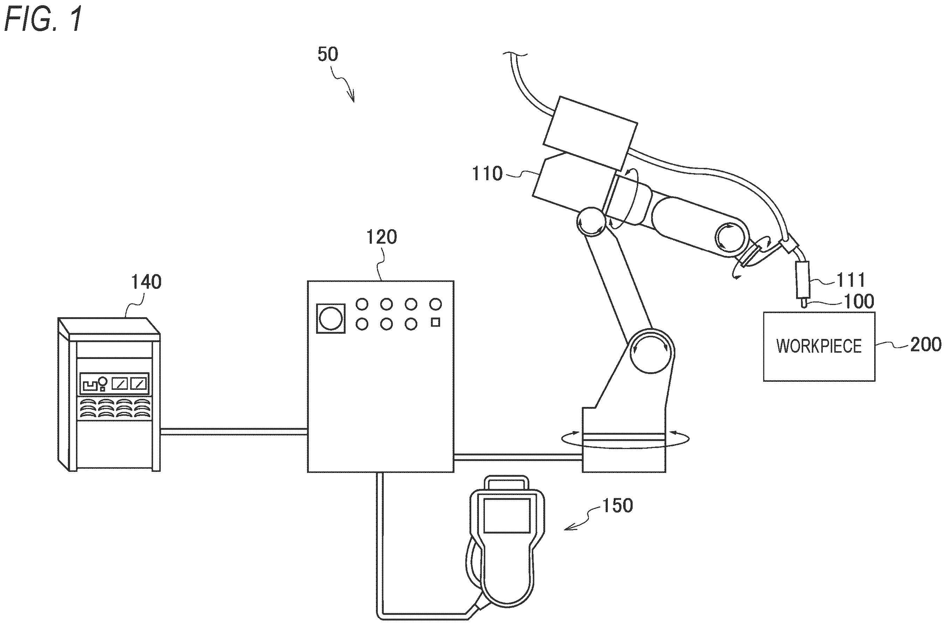

FIG. 1 is a schematic diagram illustrating a configuration example of the welding system according to the present embodiment. A welding system 50 includes a welding robot 110, a welding control device 120, a feeding device (not illustrated) that feeds a welding wire 100, a welding power supply 140, and a controller 150.

The welding power supply 140 is connected to the welding robot 110 via a positive power cable (not illustrated) so as to be able to energize the welding wire 100 serving as a consumable electrode, and is connected to a workpiece (hereinafter, also referred to as a "base metal") 200 via a negative power cable (not illustrated). The connection is for a case of preforming welding with reverse polarity. When the welding is performed with positive polarity, the welding power supply 140 may reverse the polarity.

In addition, the welding power supply 140 and the feeding device (not illustrated) for feeding the welding wire 100 are connected to each other by a signal line, and a feeding speed of the welding wire can be controlled.

The welding robot 110 includes a welding torch 111 as an end effector. The welding torch 111 has an energizing mechanism for energizing the welding wire 100, that is, a welding tip. The welding wire 100 generates an arc from a tip thereof by being energized from the welding tip, and welds the workpiece 200 to be welded by the heat. The welding tip is generally also called a contact tip.

Furthermore, the welding torch 111 includes a shielding gas nozzle that serves as a mechanism for ejecting a shielding gas. Due to the characteristics of the control used in the present embodiment, the shielding gas may have a gas composition that takes a globule transition form, and specifically, and it is preferred that the shielding gas contains at least one gas among carbon dioxide gas, nitrogen gas, hydrogen gas, and oxygen gas, which have a high potential gradient. In addition, from the viewpoint of versatility, in a case of a mixed gas with argon gas (hereinafter, also referred to as "Ar gas"), a system in which at least 30% by volume or more of carbon dioxide gas is mixed is more preferable, a system in which 90% by volume or more of carbon dioxide gas is mixed is further preferable, and it is still more preferable to use carbon dioxide gas alone. The shielding gas is supplied from a shielding gas supply device (not illustrated).

The welding wire 100 used in the present embodiment is not particularly limited, and for example, either a solid wire containing no flux or a flux-cored wire containing a flux may be used. In addition, a material of the welding wire 100 is also not limited, for example, the material may be mild steel, stainless steel, aluminum, or titanium, and a wire surface may be plated with Cu or the like. Furthermore, a diameter of the welding wire 100 is also not particularly limited. In the present embodiment, the diameter preferably has an upper limit of 1.6 mm and a lower limit of 0.8 mm.

In the present embodiment, a specific configuration of the workpiece 200 is not particularly limited, and welding conditions such as a joint shape, a welding position, and a groove shape are also not particularly limited.

The welding control device 120 mainly controls an operation of the welding robot 110. The welding control device 120 holds teaching data that defines an operation pattern, a welding start position, a welding end position, welding conditions, a wiving operation, and the like of the welding robot 110 in advance, and instructs the welding robot 110 on these data to control the operation of the welding robot 110. In addition, the welding control device 120 applies welding conditions such as a welding current, a welding voltage, and a feeding speed during a welding operation to the welding power supply 140 in accordance with the teaching data.

As illustrated in FIG. 1, the welding system 50 of the present embodiment has a configuration in which the welding control device 120 is independent of the welding power supply 140, and may have a configuration in which the welding control device 120 is provided in the welding power supply 140.

The controller 150 is connected to the welding control device 120, creates or displays a program for operating the welding robot 110, inputs the teaching data, and provides the teaching data to the welding control device 120. The controller 150 also has a function of manually operating the welding robot 110. The connection between the controller 150 and the welding control device 120 may be wired or wireless.

The welding power supply 140 generates an arc between the welding wire 100 and the workpiece 200 by supplying electric power to the welding wire 100 and the workpiece 200 according to a command from the welding control device 120. In addition, the welding power supply 140 outputs a signal for controlling a speed at which the welding wire 100 is fed to the feeding device (not illustrated) according to a command from the welding control device 120.

## EP 4 509 254 A1

<Functional Configuration of Welding Power Supply>

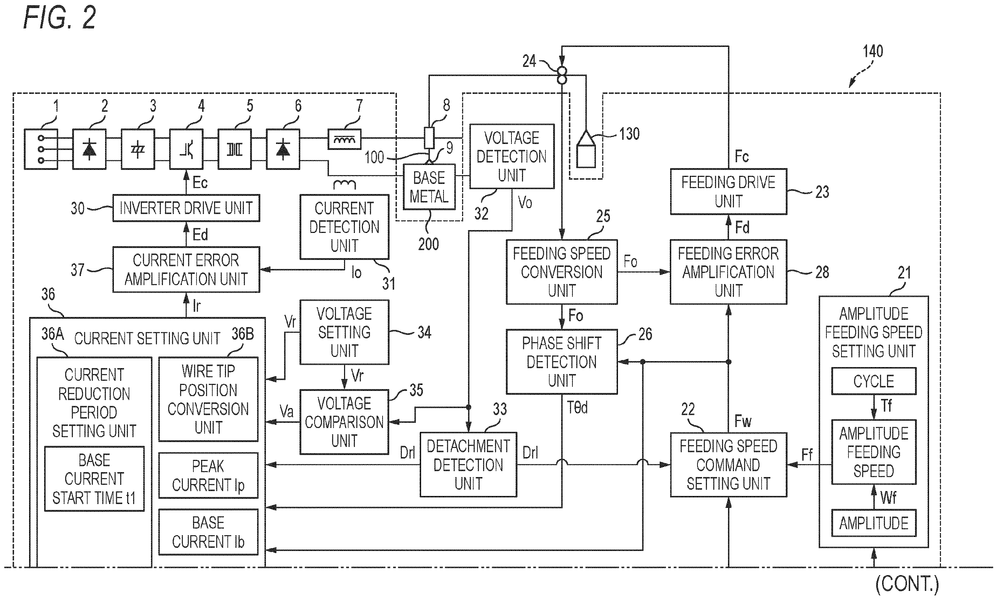

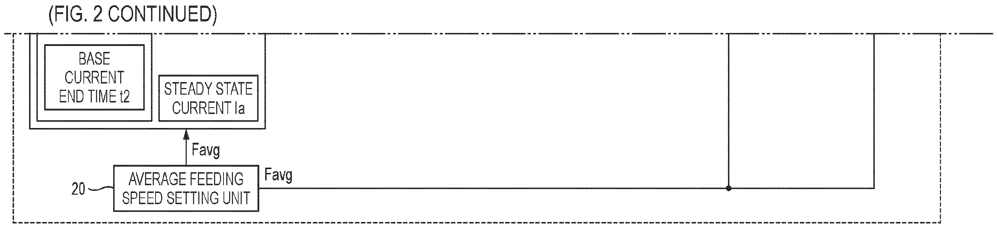

Next, a functional configuration of the welding power supply 140 according to the present embodiment will be described in detail with reference to FIG. 2. FIG. 2 is a block diagram illustrating a schematic configuration of a power supply control unit provided in the welding power supply 140.

A control system portion of the welding power supply 140 is executed, for example, through execution of a program by the welding control device 120 or a computer (not illustrated).

The control system portion of the welding power supply 140 includes a current setting unit 36. The current setting unit 36 according to the present embodiment has a function of setting a start time and an end time of a period during which a current value of a welding current is reduced by a current reduction period setting unit 36A, and a function of obtaining information on a tip position of the welding wire 100 by a wire tip position conversion unit 36B, in addition to a function of setting various current values that define a welding current flowing through the welding wire 100.

Various condition settings of a current non-reduction period $T_{IP}$ to be described later, such as a current setting point in a rising section $T_U$ or a falling section $T_D$, are included in the function of setting various current values that define the welding current in the current setting unit 36.

In the present embodiment, the welding current shows a pulse waveform in which welding currents are alternately repeated in the current non-reduction period $T_{IP}$ and a current reduction period $T_{IB}$ based on the wire tip position. The current setting unit 36 sets a set current value Ip (hereinafter, also referred to as a "peak current Ip") during the current non-reduction period $T_{IP}$ and a set current value Ib (hereinafter, also referred to as a "base current Ib") during the current reduction period $T_{IB}$. In the present embodiment, the welding current is basically controlled by two values of the peak current Ip and the base current Ib. Therefore, a time t1 when a period during which the current value is reduced starts represents a time when the base current Ib starts, that is, a base current start time. In addition, a time t2 when a period during which the current value is reduced ends represents a time when the base current Ib ends, that is, a base current end time. A time when the current non-reduction period $T_{IP}$ starts may be expressed as a peak current start time, and a time when the current non-reduction period $T_{IP}$ ends may be expressed as a peak current end time.

A power supply main circuit of the welding power supply 140 includes a three-phase alternating-current power supply (hereinafter, also referred to as "alternating-current power supply") 1, a primary-side rectifier 2, a smoothing capacitor 3, a switching element 4, a transformer 5, a secondary-side rectifier 6, and a reactor 7.

An alternating-current power input from the alternating-current power supply 1 is full-wave rectified by the primary-side rectifier 2 and further smoothed by the smoothing capacitor 3 to be converted into a direct-current power. Next, the direct-current power is converted into a high-frequency alternating-current power by inverter control using the switching element 4, and then converted into a secondary-side power via the transformer 5. An alternating-current output of the transformer 5 is full-wave rectified by the secondary-side rectifier 6 and further smoothed by the reactor 7. An output current of the reactor 7 is supplied to a welding tip 8 as an output from the power supply main circuit, and the welding wire 100 serving as a consumable electrode is energized.

The welding wire 100 is fed by a feeding motor 24 and a feeding device 130, and generates an arc 9 between the welding wire 100 and a base metal 200. In the present embodiment, the feeding motor 24 feeds the welding wire 100 such that a forward feeding period $T_P$ during which the tip of the welding wire 100 moves toward the base metal 200 and a backward feeding period $T_N$ during which the tip of the welding wire 100 moves in a direction opposite to a direction in which the base metal 200 is located are periodically switched when the forward feeding period $T_P$ and the backward feeding period $T_N$ are set as one cycle. In addition, the "tip of the welding wire" referred to herein generally refers to a wire tip when the presence of a droplet hanging down from the wire tip is ignored. That is, the wire melted by the arc is considered to be transferred to the base metal immediately. As will be described later, the position is determined by a speed difference between a wire feeding speed and a wire melting speed.

The feeding of the welding wire 100 made by the feeding motor 24 is controlled by a control signal Fc from a feeding drive unit 23. An average value of the feeding speed is substantially the same as the melting speed. In the present embodiment, the feeding of the welding wire 100 made by the feeding motor 24 is also controlled by the welding power supply 140.

A voltage setting signal Vr, which is a target value of a voltage applied between the welding tip 8 and the base metal 200, is given from a voltage setting unit 34 to the current setting unit 36. The voltage setting signal Vr is also given to a voltage comparison unit 35 and compared with a voltage detection signal Vo detected by a voltage detection unit 32. The voltage detection signal Vo is a measured value. The voltage comparison unit 35 amplifies a difference between the voltage setting signal Vr and the voltage detection signal Vo, and outputs the amplified difference to the current setting unit 36 as a voltage error amplification signal Va. The current setting unit 36 controls the welding current such that a length of the arc 9 (hereinafter, also referred to as an "arc length") is constant. That is, the current setting unit 36 executes constant voltage control through the control of the welding current.

Based on the voltage setting signal Vr and the voltage error amplification signal Va, the current setting unit 36 resets a value of the peak current Ip, a value of the base current Ib, a period during which the peak current Ip is given, or a size of the value of the peak current Ip, and a size of the value of the base current Ib, and outputs to a current error amplification unit 37 a current setting signal Ir corresponding to the reset period or the size of the value.

The current error amplification unit 37 amplifies a difference between the current setting signal Ir given as a target value and a current detection signal Io detected by a current detection unit 31, and outputs the amplified difference to an inverter drive unit 30 as a current error amplification signal Ed. The inverter drive unit 30 corrects a drive signal Ec of the switching element 4 based on the current error amplification signal Ed.

The current setting unit 36 also receives a detachment detection signal Drl, which is a signal for detecting the detachment of a droplet from the tip of the welding wire 100. The detachment detection signal Drl is output from a detachment detection unit 33. The detachment detection unit 33 monitors a change in the voltage detection signal Vo output from the voltage detection unit 32, and detects the detachment of a droplet from the welding wire 100 based on the change. The detachment detection unit 33 is an example of a detection means.

The detachment detection unit 33 detects the detachment of a droplet by, for example, comparing a value obtained by differentiating or second-order differentiating the voltage detection signal Vo with a detection threshold value. The detection threshold value is stored in advance in a storage unit (not illustrated). The detachment detection unit 33 may generate the detachment detection signal Drl based on a change in a resistance value calculated based on the voltage detection signal Vo and the current detection signal Io, which are measured values.

The current setting unit 36 also receives an average feeding speed Favg of the welding wire 100 to be fed. The average feeding speed Favg is output by an average feeding speed setting unit 20 based on teaching data stored in the storage unit (not illustrated). That is, the average feeding speed Favg may be referred to as a set value (command value) of the feeding speed.

The current setting unit 36 determines the value of the peak current Ip, the value of the base current Ib, the value of the time t1 when the base current Ib starts, and the value of the time t2 when the base current Ib ends, based on the given average feeding speed Favg.

In the present embodiment, as illustrated in FIG. 2, the average feeding speed Favg is input to the current setting unit 36, and the signal input to the current setting unit 36 may be replaced with the average feeding speed Favg, with a value related to the average feeding speed Favg being used as the set value. For example, in a case in which a database of the average feeding speed Favg and an average current value at which optimal welding can be performed at the average feeding speed Favg is stored in the storage unit (not illustrated), the average current value may be used as a set value and may be replaced with the average feeding speed Favg.

The average feeding speed Favg is also given to an amplitude feeding speed setting unit 21 and a feeding speed command setting unit 22. The amplitude feeding speed setting unit 21 determines a value of an amplitude Wf and a value of a cycle Tf based on the input average feeding speed Favg. The amplitude feeding means a feeding method in which a forward feeding period that is a period during which the feeding speed is higher than the average feeding speed Favg and a backward feeding period that is a period during which the feeding speed is lower than the average feeding speed Favg alternately appear. The period during which the feeding speed is lower than the average feeding speed Favg refers to a period during which a feeding speed is less than the average feeding speed Favg, the feeding speed including a negative feeding speed, that is, a speed at which the wire tip moves in the direction opposite to the position of the base metal 200. The amplitude Wf gives a change width with respect to the average feeding speed Favg, and the cycle Tf gives a time of amplitude change, which is a repetition unit. The amplitude feeding speed setting unit 21 generates an amplitude feeding speed Ff corresponding to the determined value of the amplitude Wf and the determined value of the cycle Tf or a value of a frequency f, and outputs the amplitude feeding speed Ff.

The feeding speed command setting unit 22 outputs a feeding speed command signal Fw based on the amplitude feeding speed Ff and the average feeding speed Favg. In the present embodiment, the feeding speed command signal Fw is represented by the following equation.

$$Fw = Ff + Favg...(A)$$

In addition, the feeding speed command setting unit 22 detects at which phase of amplitude feeding the detachment has occurred, based on the detachment detection signal Drl given from the detachment detection unit 33. The feeding speed command signal Fw represented by Equation (A) is limited to a case in which the detachment of a droplet from the tip of the welding wire 100 is detected within an assumed period. When no detachment of a droplet is detected within the assumed period, the feeding speed command setting unit 22 may switch the feeding speed command signal Fw to feeding control at a constant speed. For example, the feeding speed command setting unit 22 switches the feeding speed command signal Fw to feeding at the average feeding speed Favg. The switching from the feeding at the average feeding speed Favg to the feeding control represented by Equation (A) is determined according to a timing at which the detachment of a droplet is detected.

The feeding speed command signal Fw is output to a phase shift detection unit 26, a feeding error amplification unit 28, and the current setting unit 36.

The feeding error amplification unit 28 amplifies a difference between the feeding speed command signal Fw, which is a target speed, and a feeding speed detection signal Fo obtained by measuring the feeding speed of the welding wire 100 made by the feeding motor 24, and outputs a speed error amplification signal Fd for correcting an error difference to the feeding drive unit 23.

The feeding drive unit 23 generates the control signal Fc based on the speed error amplification signal Fd and gives the control signal Fc to the feeding motor 24. The feeding speed conversion unit 25 converts a rotation amount of the feeding motor 24 or the like into the feeding speed detection signal Fo of the welding wire 100.

The phase shift detection unit 26 according to the present embodiment compares the feeding speed command signal Fw with the feeding speed detection signal Fo, which is a measured value, and outputs a phase shift time T$\theta$d. The phase shift detection unit 26 may determine the phase shift time T$\theta$d by measuring a feeding operation of the feeding motor 24 in a case in which parameters defining the amplitude feeding, for example, the cycle Tf, the amplitude Wf, and the average feeding speed Favg are varied.

The phase shift time T$\theta$d is given to the wire tip position conversion unit 36B of the current setting unit 36. The wire tip position conversion unit 36B calculates the tip position of the welding wire 100 using the base metal 200 as a reference plane based on the feeding speed command signal Fw and the phase shift time T$\theta$d, and gives information on the calculated tip position to the current reduction period setting unit 36A. Here, the current reduction period setting unit 36A sets a period during which the welding current is reduced, that is, a period during which the current setting signal Ir is controlled to the base current Ib, based on the information on the tip position of the welding wire 100 or based on the information on the tip position of the welding wire 100 and the feeding speed command signal Fw.

The current setting unit 36 is an example of a control means that changes the welding current according to the tip position of the welding wire 100.

<Basic Control of Welding Current based on Information on Tip Position of Welding Wire or Feeding Speed Command Signal Fw>

Hereinafter, a control example of the welding current made by the welding power supply 140 based on the information on the tip position of the welding wire 100 or the feeding speed command signal Fw will be described.

The control of the welding current is implemented by the current setting unit 36 constituting the welding power supply 140. As described above, the current setting unit 36 according to the present embodiment implements control through the execution of the program.

The current setting unit 36 according to the present embodiment controls the switching of the current value of the welding current based on the information on the tip position of the welding wire 100 and the feeding speed command signal Fw of the welding wire 100. Therefore, prior to the description of the control of the welding current, a temporal change in the feeding speed command signal Fw and a temporal change in the tip position of the welding wire 100 will be described.

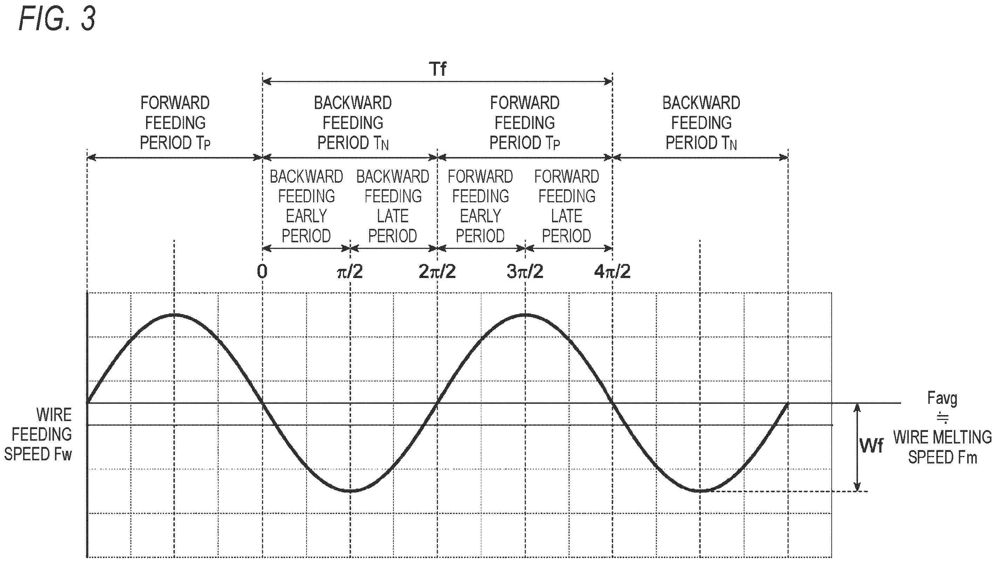

FIG. 3 is a waveform diagram illustrating the temporal change in the feeding speed command signal Fw. A horizontal axis represents a time (phase), and a vertical axis represents a wire feeding speed. A unit of the vertical axis is meter per minute or a rotational speed. In FIG. 3, a speed higher than the average feeding speed Favg is represented as "forward feeding", and a speed lower than the average feeding speed Favg is represented as "backward feeding". In the present embodiment, the feeding speed command signal Fw changes in a sine waveform shape defined by the cycle Tf and the amplitude Wf, and is not particularly limited to the sine waveform shape. In the following description, the period during which the feeding speed is higher than the average feeding speed Favg is referred to as the forward feeding period $T_P$, and the period during which the feeding speed is lower than the average feeding speed Favg is referred to as the backward feeding period $T_N$. For convenience of description, a first half of each feeding period is referred to as an "early period" and a second half of each feeding period is referred to as a "late period".

Here, the average feeding speed Favg can be regarded as a wire melting speed Fm.

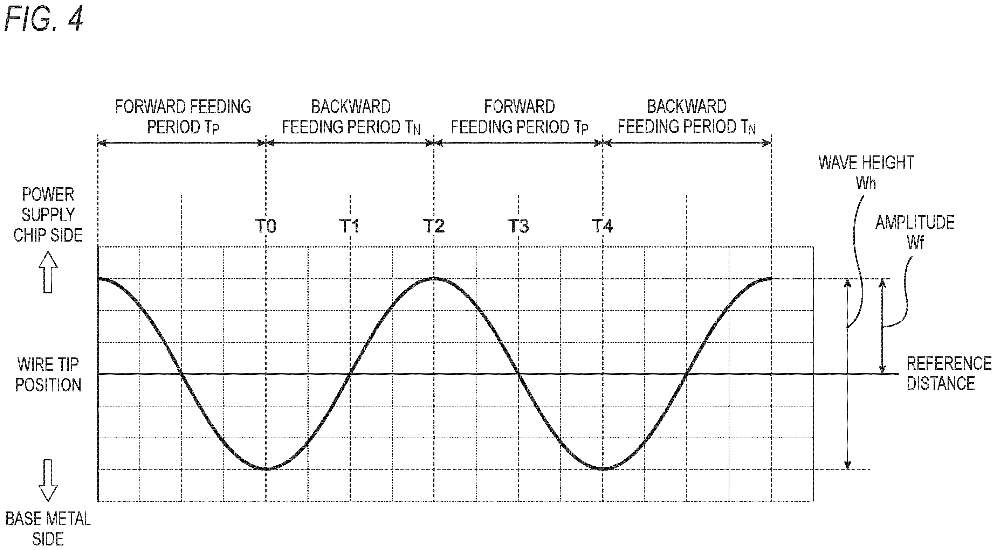

FIG. 4 is a waveform diagram illustrating the temporal change in the tip position of the welding wire 100 (hereinafter, also referred to as a "wire tip position"). A horizontal axis represents a time (phase), and a vertical axis represents a distance (height) from a surface of the base metal 200 upward in a normal direction.

In FIG. 4, a position (height) in a case in which the welding wire 100 is fed at a highest feeding speed is defined as a reference distance, a distance larger than the reference distance is represented by a positive value, and a distance smaller than the reference distance is represented by a negative value.

In FIG. 4, time points corresponding to a position at which the tip position of the welding wire 100 is closest to the surface of the base metal (hereinafter, also referred to as a "lowermost end") are represented by T0 and T4, and a time point corresponding to a position at which the tip position of the welding wire 100 is farthest from the surface of the base metal (hereinafter, also referred to as an "uppermost end") is represented by T2. A vertex is an example of the uppermost end.

As illustrated in FIG. 4, a period during which the tip position of the welding wire 100 approaches the surface of the base metal as time elapses, specifically, a period during which the tip position of the welding wire 100 moves from the uppermost end to the lowermost end is the "forward feeding period $T_P$", and a period during which the tip position of the welding wire 100 moves away from the surface of the base metal as time elapses, specifically, a period during which the tip position of the welding wire 100 moves from the lowermost end to the uppermost end is the "backward feeding period $T_N$".

The time points corresponding to the reference distance are represented by T1 and T3. T1 is an intermediate time point at which the tip position of the welding wire 100 is directed from the lowermost end which is a position closest to the surface of the base metal to the uppermost end which is a position farthest from the surface of the base metal. On the other hand, T3 is an intermediate time point from the uppermost end to the lowermost end. As illustrated in FIG. 4, a change width from the reference distance to the uppermost end or a change width from the reference distance to the lowermost end is the "amplitude Wf", and a change width from the uppermost end to the lowermost end is a "wave height Wh".

As can be seen from FIGS. 3 and 4, the feeding speed of the welding wire 100 when the tip of the welding wire 100 is located at the uppermost end or the lowermost end is set to a predetermined value of the average feeding speed Favg. Accordingly, even when the wire feeding speed is periodically changed, the wire melting speed and the wire feeding speed are balanced, the arc length becomes substantially constant, and stable welding can be continued.

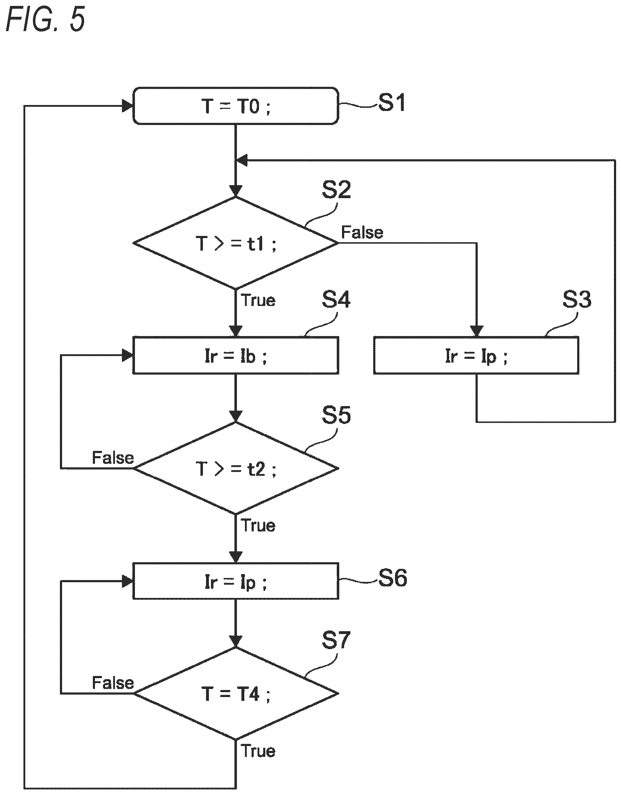

FIG. 5 is a flowchart illustrating an example of the basic control of the welding current according to the present embodiment. The control illustrated in FIG. 5 is executed by the current setting unit 36 described in FIG. 2. A symbol S in the drawing indicates a step. The control illustrated in FIG. 5 corresponds to a change in one cycle at the tip position of the welding wire 100. Therefore, in FIG. 5, a state in which a time T is the time point T0 is referred to as step 1. The current setting unit 36 according to the present embodiment calculates the tip position of the welding wire 100 in order to control the current setting signal Ir. The average feeding speed Favg is equal to the wire melting speed Fm. Therefore, the tip position of the welding wire 100 can be determined by integrating a difference between the feeding speed command signal Fw and the wire melting speed Fm ($\approx$ Favg). Therefore, the current setting unit 36 sets the tip position of the welding wire 100 according to the following equation.

$$\text{Wire tip position} = \int(\text{Fw - Favg}) \, dt...(B)$$

A change in the tip position calculated according to Equation (B) corresponds to FIG. 4.

When the feeding motor 24 described in FIG. 2 is used for feeding the welding wire 100, a phase shift may occur between a command and an actual feeding speed, that is, the feeding speed detection signal Fo. Therefore, the current setting unit 36 corrects the base current start time t1 calculated according to the tip position of the welding wire 100 calculated based on the average feeding speed Favg and the feeding speed command signal Fw, using the phase shift time $T\theta d$ given from the phase shift detection unit 26. Specifically, a value of the base current start time t1 is reset as shown in the following equation.

$$t1 = t1 + T\theta d...(C)$$

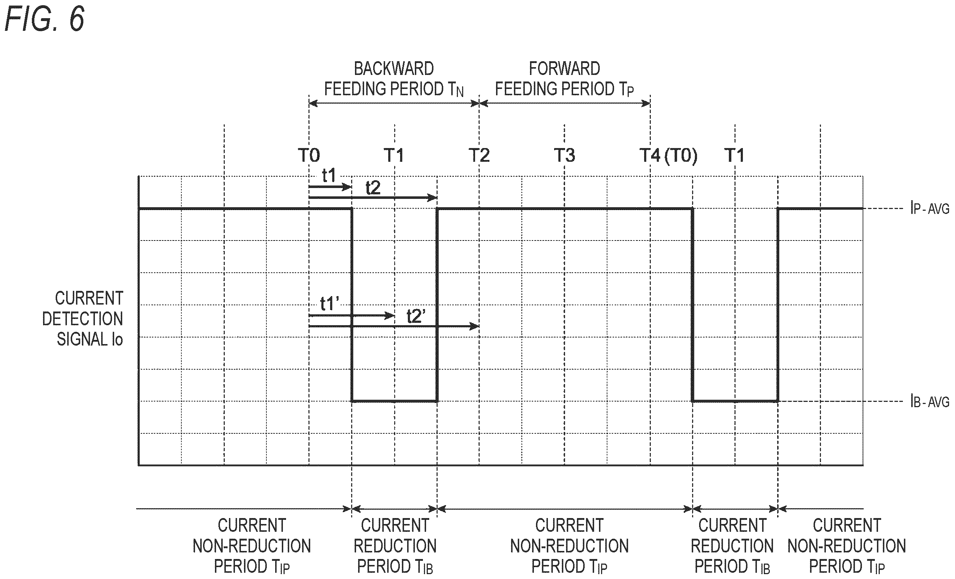

As illustrated in FIG. 6, the base current start time t1 represents a phase delayed from the time point T0 at which the tip of the welding wire 100 is located at the lowermost end, that is, a time point at which the forward feeding period $T_P$ is switched to the backward feeding period $T_N$. In FIG. 6, a maximum value of the base current start time t1 is indicated by t1'.

Returning to the description of FIG. 5. As shown in step 2, when the tip position of the welding wire 100 reaches the lowermost end, that is, the time point T0, the current setting unit 36 determines whether the time T when the measurement starts from the time point T0 is equal to or longer than the base current start time t1. While a determination result of step 2 is False, as shown in step 3, the current setting unit 36 continues to output the peak current Ip as the current setting signal Ir. This period corresponds to the current non-reduction period $T_{IP}$ illustrated in FIG. 6.

Subsequently, as illustrated in FIG. 5, when the determination result of step 2 is True, as shown in step 4, the current setting unit 36 starts outputting the base current Ib as the current setting signal Ir. As described above, at a time point at which the switching to the base current Ib starts, the feeding of the welding wire 100 is already switched to the backward feeding period $T_N$, and the tip of the welding wire 100 starts moving in a direction away from the surface of the base metal.

A droplet near the time point T0 at which the tip of the welding wire 100 is located at the lowermost end is located in the vicinity of a molten pool, and thus the arc length is shortened. After the time point T0, the feeding is switched to the backward feeding period $T_N$. That is, the tip of the welding wire 100 is moved so as to be pulled up. The entire grown droplet is subjected to an inertial force in a forward feeding direction, that is, in a direction approaching the base metal 200, while the welding wire 100 moves in the opposite direction, that is, a direction away from the base metal 200, causing the droplet to change to a more suspended shape, further promoting detachment. In the present invention, unless otherwise specified, the detachment of a droplet refers to both the transfer of a droplet due to a short-circuit and the transfer of a droplet due to free fall without short-circuit (short-circuit free).

By switching the current value of the welding current to the base current Ib during a period during which a detachment is predicted, an arc reaction force can be reduced more than during a period during which the peak current Ip is supplied. As a result, a force for lifting a droplet becomes weaker, making the droplet more likely to assume a suspended shape. In this manner, by causing the droplet to detach from the tip of the welding wire 100 during the current reduction period $T_{IB}$ that is a period during which the welding current is reduced, it can be expected that the amount of spatter will be reduced even if a short-circuit occurs.

Returning to the description of FIG. 5 again. As illustrated in step 5, the current setting unit 36 that switches the current setting signal Ir to the base current Ib determines whether the time T is equal to or longer than the base current end time t2. In FIG. 6, a maximum value of the base current end time t2 is indicated by t2'. While a determination result of step 5 is False, as shown in step 4, the current setting unit 36 outputs the base current Ib as the current setting signal Ir. After the supply of the base current Ib is started, the tip of the welding wire 100 moves so as to be pulled up to a vertex, that is, the position at which the tip is farthest from the base metal 200 while the droplet is detached.

After the droplet is detached, in order to melt the welding wire 100 to form a droplet, it is necessary to end a supply period of the base current Ib, that is, the current reduction period $T_{IB}$, and switch to a period during which the peak current Ip is supplied, that is, the current non-reduction period $T_{IP}$. Therefore, it is desirable that the supply of the base current Ib ends between the time points T1 and T2.

When the determination result of step 5 is True, as shown in step 6, the current setting unit 36 starts outputting the peak current Ip as the current setting signal Ir. Subsequently, as shown in step 7, the current setting unit 36 determines whether the time T when the measurement starts from the time point T0 reaches the time point T4. While a determination result of step 7 is False, as shown in step 6, the current setting unit 36 outputs the peak current Ip as the current setting signal Ir. On the other hand, when the determination result of step 7 is True, the current setting unit 36 returns to step 1. According to the above control, the current setting signal Ir has a pulse waveform in which the peak current Ip and the base current Ib are periodically repeated.

The above description is the basic control of the welding current made by the welding power supply 140 based on the information on the tip position of the welding wire 100 or the feeding speed command signal Fw. The inventors of the present invention applied the basic control and conducted intensive studies, and as a result, found that the above problems can be solved by setting or correcting values of various items of the welding conditions based on a short-circuit time ratio, and completed the present invention.

Here, the short-circuit time ratio is an average value obtained by determining a ratio of a predetermined time and a total time of short-circuits occurring within the predetermined time. In the present embodiment, the calculation is performed when there are one or more cycles including an arc period and a short-circuit period within the predetermined time. On the other hand, when the short-circuit period is not included in the predetermined time, the short-circuit time ratio is regarded as zero. The predetermined time may be any fixed time or may be based on a cycle or a frequency, and from the viewpoint of facilitating calculation, the time may be determined based on the frequency or the number of cycles. Hereinafter, unless otherwise specified, the short-circuit time ratio refers to the above average value. In the present embodiment, the short-circuit time ratio is calculated based on a ratio of a total short-circuit time occurring in about 3.1 seconds, which corresponds to 218 cycles at 70 Hz. In the present embodiment, the short-circuit is determined based on a detected value of an arc voltage, and when the detected value of the arc voltage is 12V or less, it is determined that a short-circuit occurs.

The short-circuit period is a period from when the arc disappears due to the contact between the welding wire and the base metal to when the arc is generated due to the separation between the welding wire and the base metal, and the arc period is a period during which the welding wire and the base metal are separated from each other and an arc continues being generated, that is, a period other than the short-circuit period.

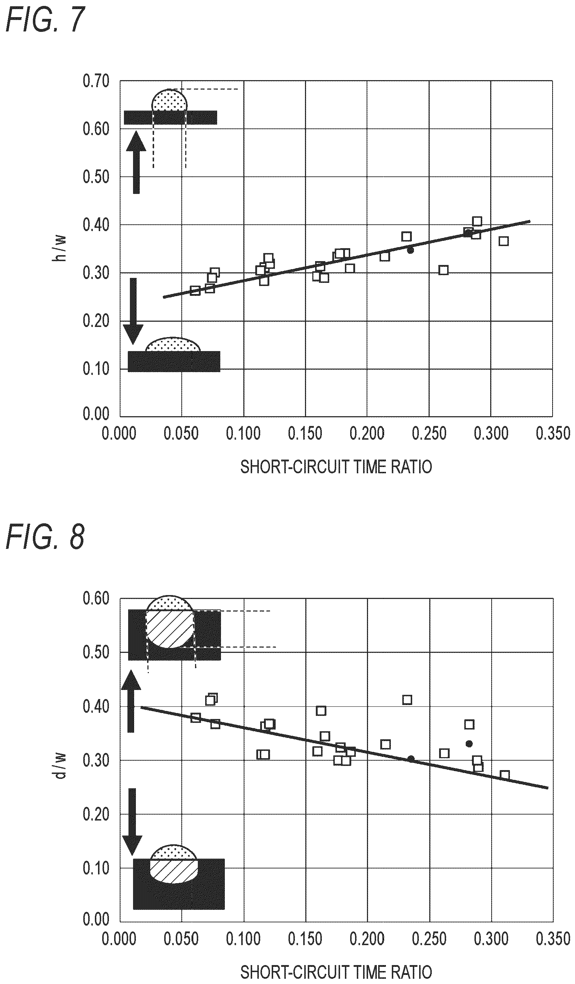

In a relation between the short-circuit time ratio, and the bead appearance and the penetration performance using the present basic control, as illustrated in FIGS. 7 and 8, as the short-circuit ratio increases, the bead appearance tends to deteriorate, and the penetration performance tends to decrease. FIGS. 7 and 8 illustrate test results in examples (see Tables 1-1 to 1-4) in which the average feeding speed Favg is 7 m/min and the travel speed is 50 cm/min, which will be described later.

In the present embodiment, the bead appearance (hereinafter, also referred to as "flatness of the bead") is used as an index for evaluating the bead appearance by using "h/w" which is a ratio of a bead height h and a bead width w with emphasis on the flatness of the bead. That is, it is determined that the bead appearance becomes worse because the bead becomes convex as the h/w becomes larger, and it is determined that the bead appearance becomes better because the bead becomes flatter as the h/w becomes smaller.

On the other hand, "d/w", which is a ratio of a penetration depth d to the bead width w, is adopted and used as an index for evaluating the penetration performance. That is, it is determined that the penetration performance becomes higher because the penetration with respect to the width becomes larger as the d/w becomes larger, and it is determined that the penetration performance becomes lower because the penetration with respect to the width becomes smaller as the d/w becomes smaller.

Based on the above relation, in the present basic control method, it is possible to adjust the penetration depth to an appropriate penetration depth according to a situation in a range in which the bead appearance is good by selecting an optimum short-circuit time ratio and setting a welding condition corresponding to the selected short-circuit time ratio, or by controlling the short-circuit time ratio and correcting the welding condition. For example, when using a galvanized steel sheet, in order to increase the penetration depth for the purpose of improving porosity resistance, the welding condition may be set or corrected so that the short-circuit time ratio is small, and when a thinner sheet is welded, the welding condition may be set or corrected so that the short-circuit time ratio is large in order to decrease the penetration depth.

The reason why the welding condition can be set or corrected based on the short-circuit time ratio is due to the present basic control in which good weldability can also be obtained using $CO_2$ gas. In a welding method in the related art, for example, the MAG welding, sufficient penetration cannot be obtained even if no short-circuit occurs, the penetration depth cannot be adjusted based on the short-circuit time ratio as in the present invention. In addition, the feeding control technique in the related art is a technique of low heat input and short-circuit center, and thus the sufficient penetration cannot be obtained. Furthermore, a region in which the short-circuit time ratio is small is out of an applicable range because good weldability cannot be obtained unlike the present basic control. For this reason, the penetration depth cannot be adjusted based on the short-circuit time ratio in the feeding control technique in the related art.

An influence of the short-circuit time ratio tends to differ depending on the average feeding speed Favg, the travel speed, or the like, and thus it is preferred to confirm the influence of the short-circuit time ratio at least for each average feeding speed Favg. The lower the average feeding speed Favg is, the smaller a thermal energy for melting is, and thus the lower the penetration performance is. In particular, as the travel speed becomes higher, the tendency becomes more remarkable, and the penetration depth may change at a certain short-circuit time ratio.

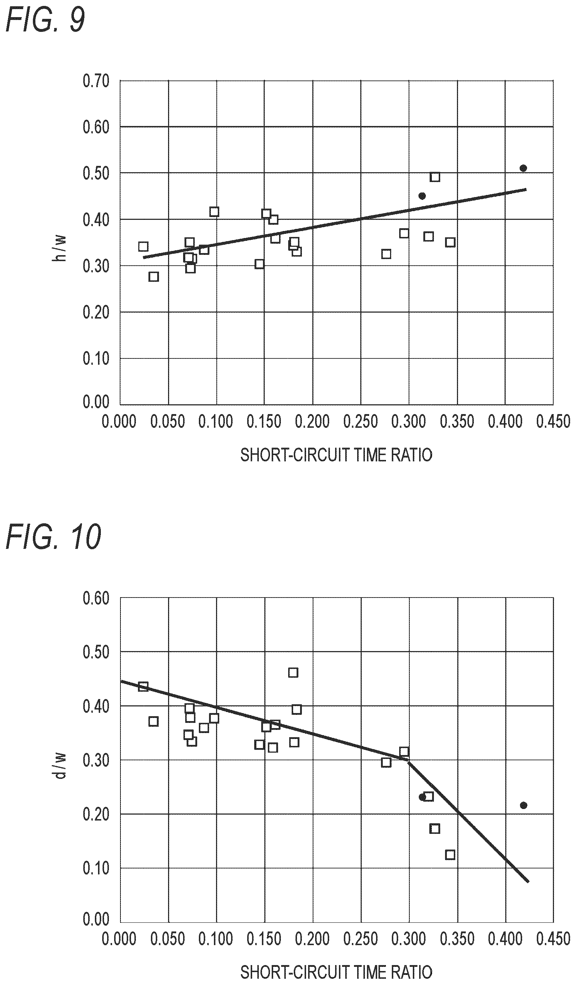

In the present embodiment, when the average feeding speed Favg is 7 m/min and the travel speed is 100 cm/min, the penetration tends to become extremely small after the short-circuit time ratio reaches approximately 0.300 (see FIG. 10). Referring to FIGS. 9 and 10 which are test results in examples (see Tables 1-1 to 1-4) in which the average feeding speed Favg is 7 m/min and the travel speed is 100 cm/min, which will be described later, there is a region of the short-circuit time ratio in which both the bead appearance and the penetration performance are not satisfied when the short-circuit time ratio becomes large, and thus a threshold value may be provided for the short-circuit time ratio to be applied, and the welding conditions may be set or corrected so that the short-circuit time ratio is equal to or less than the threshold value. In addition, a target value may be set within a range equal to or less than the threshold value, and the welding conditions may be set or corrected so that the short-circuit time ratio is equal to the target value.

The threshold value of the short-circuit time ratio varies depending on the welding information. As described above, the influence of the short-circuit time ratio varies depending on the items of the welding conditions such as the average feeding speed Favg or the travel speed, and this is because a weld amount related to the average feeding speed Favg or the travel speed depends on the items of the welding conditions such as a welding wire to be used, a shielding gas type, and the base metal. Therefore, it is preferred that the threshold value or the target value of the short-circuit time ratio is selected as an item of the welding information from at least one of the welding wire (hereinafter, also referred to as a "welding material"), the gas composition, a welding wire diameter, a plate thickness of the base metal, a feeding speed set value (= average feeding speed Favg), and the travel speed.

The "welding information" referred to herein means an information group related to various conditions including the welding conditions. The welding information includes environmental conditions including information on items such as temperature and humidity, and welding phenomenon amounts including geometric amounts of items such as spatter and fume amount in addition to the welding conditions. Examples of the items constituting the "welding conditions" include a gap, a plate thickness, a welding material, a shielding gas type, a base metal, a welding length, a welding current, an arc voltage, a travel speed, a shielding gas flow rate, and various wiving conditions (for example, a wiving width, a wiving cycle, and a wiving end stop time). Here, the terms of the "welding information" refers to items of various conditions.

From the above, it is necessary to determine a range of the short-circuit time ratio to be applied in the present basic control, and a boundary thereof is related to the welding information, and thus it is more preferred to determine the short-circuit time ratio serving as the boundary based on the welding information. In the present embodiment, when the welding wire is mild steel, the shielding gas is 100% $CO_2$ gas, and the travel speed is 50 cm/min on a normal-speed side or 100 cm/min on a high-speed side, the threshold value of the short-circuit time ratio is determined based on the average feeding speed Favg. Specifically, the short-circuit time ratio may be equal to or less than a value of the following expression (1). In the present embodiment, a travel speed of less than 80 cm/min is defined as a normal speed, and a travel speed of 80 cm/min or higher is defined as a high speed.

The following expression (1) is a calculation expression for a preferred threshold value at least in the case of the welding conditions (hereinafter, also referred to as "welding modes") related to a weld amount in which the welding wire is mild steel and the shielding gas is 100% $CO_2$ gas. However, for example, another calculation expression is used in a welding mode in a case in which the welding wire is stainless steel and the shielding gas is a mixed gas of 80% Ar gas + 20% $CO_2$ gas.

$$0.007 \times \mathrm{Fw} + 0.249...(1)$$

The threshold value or the target value of the short-circuit time ratio may be determined depending on an application or a situation. For example, in the case in which the above conditions are the Favg of 7 m/min and the travel speed of 100 cm/min, the short-circuit time ratio is determined to be 0.200 or less in the case of handling a galvanized steel sheet, and the short-circuit time ratio is determined to be in a range of 0.200 or more and 0.300 or less in the case of handling a thinner sheet, and the welding conditions are set or corrected based on the threshold value or the target value of the short-circuit time ratio.

<Setting Method Example>

Next, a setting method example of the present embodiment will be described. The setting method is merely an example, and is not limited thereto.
An example of the setting method will be described below.

(a) In the present embodiment, tests are performed under various welding conditions for each welding mode in advance, a short-circuit time ratio is calculated, and a threshold value or a target value of the short-circuit time ratio is determined (short-circuit time ratio determination step).
(b) The welding conditions are determined so that the short-circuit time ratio is equal to or less than the determined threshold value or is equal to the determined target value. Alternatively, the welding conditions are determined based on a database created for each welding mode so that the short-circuit time ratio is equal to or less than the determined threshold value or is equal to the determined target value.
(c) In a case in which the database is applied, when welding modes (at least the welding wire and the shielding gas) are selected and at least one item of the welding information is input, other welding conditions are automatically and initially set based on the database. For example, when an operator inputs and sets the feeding speed or the travel speed, the welding current, the arc voltage, or the like are automatically extracted and set. The database is preferably created by providing at least the items of the welding conditions such as a frequency, an amplitude, a welding current set value, and an arc voltage set value for the feeding speed.

<Control Method Example>

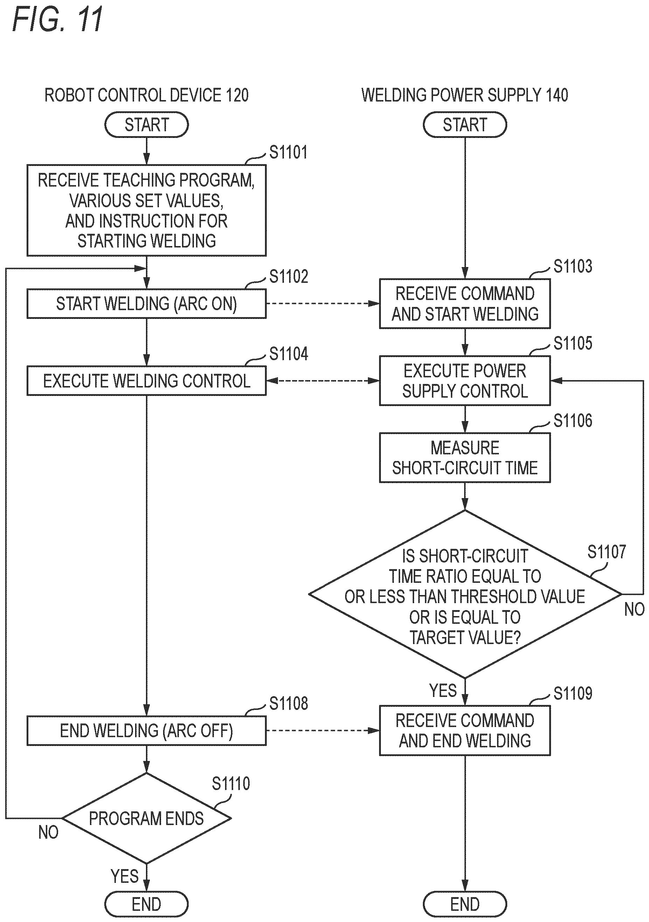

Next, a control method based on the short-circuit time ratio will be described with reference to FIG. 11. FIG. 11 is a flowchart illustrating processing operations of the robot control device 120 and the welding power supply 140. When starting the arc welding, the operator operates a teaching pendant 150 provided in the robot control device 120 to input a teaching program to be applied and various set values to the robot control device 120 or utilizes the above database to automatically set a part of setting items. The teaching program is defined as a taught program in which the movement of the welding robot 110 and instructions for starting and ending welding are taught in advance.
In step S1101, the robot control device 120 receives the teaching program and various set value instructions.
In step S1102, after starting the teaching program, the robot control device 120 moves the welding robot 110 to a predetermined welding start position and instructs the welding power supply 140 to start welding (arc on). Before the start of welding, sensing may be performed to correct set values of the teaching program.
In step S1103, the welding power supply 140 receives a welding start command from the robot control device 120. Thereafter, the welding power supply 140 controls a power supply circuit (not illustrated) incorporated therein to supply electric power, thereby starting welding. Accordingly, a voltage is applied between the welding wire 100 (see FIG. 1) and the workpiece 200 (see FIG. 1), and an arc is generated at the welding start position.
In step S1104, the robot control device 120 transmits a control signal to the welding power supply 140 or the welding robot 110 to execute welding control. The welding control includes, for example, control of the welding conditions, control of a wiving operation, and welding line profiling control. In the control of the welding conditions, the welding torch 111 is automatically moved in a welding direction, while a signal for controlling at least one of the travel speed, the feeding speed, the welding current, or the arc voltage is transmitted to a peripheral device such as the welding robot 110, the welding power supply 140, or a feeder to execute the welding control.
In step S1105, the welding power supply 140 controls the welding current and the feeding as described in FIG. 2. The welding power supply 140 preferably includes a calculation unit (not illustrated in FIG. 2) that calculates a short-circuit time ratio. For example, the voltage detection signal Vo may be taken from the voltage detection unit 32 in FIG. 2, a short-circuit counter unit (not illustrated in FIG. 2) that detects a short-circuit based on the voltage detection signal Vo may be provided, and a result of the short-circuit counter unit may be input to the calculation unit to calculate the short-circuit time ratio.
For example, the short-circuit counter unit determines that a short-circuit occurs when the voltage detection signal Vo falls below a threshold value of 12V, measures the short-circuit time in step S1106, and inputs the short-circuit time to the calculation unit. The calculation unit may calculate a short-circuit time (short-circuit time/fixed time) generated in a predetermined fixed time as a short-circuit time ratio. The short-circuit counter unit and the calculation unit referred to herein do not need to be provided in the welding power supply, and may be provided in, for example, the robot control device 120, or a control unit other than the robot control device 120 and the welding power supply 140, for example, a PC may be prepared to calculate the short-circuit time ratio in the PC.

In step S1107, the welding power supply 140 determines the calculated short-circuit time ratio. A determination unit that performs the determination does not need to be provided in the welding power supply 140, and for example, may be provided in the robot control device 120, or in the control unit other than the robot control device 120 and the welding power supply 140. The threshold value or the target value used for the determination may be a fixed value set in advance, or may be a value calculated based on the welding information.

In the present embodiment, when the short-circuit time ratio is not equal to or less than the threshold value or is not equal to the target value, a correction amount of the welding conditions may be calculated based on the calculated short-circuit time ratio, and the threshold value or the target value. Specifically, it is preferred to calculate the correction amount of the welding conditions based on the difference between the calculated short-circuit time ratio, and the threshold value or the target value. In the present embodiment, the items of the welding conditions for obtaining the correction amount include the frequency when the forward feeding period and the backward feeding period of the welding wire are set as one cycle, the amplitude of the welding wire at the time of forward feeding and backward feeding, the welding current set value during the current non-reduction period, the arc voltage set value during the current non-reduction period, the welding current set value during the current reduction period, the arc voltage set value during the current reduction period, the wire position information for ending the current non-reduction period, the wire position information for ending the current reduction period, the ratio of the forward feeding period to the backward feeding period, and the like, and it is more preferred to correct at least one of these items.

In step S1108, the robot control device 120 ends the welding (arc off) based on the program.

In step S1109, the welding power supply 140 receives a welding end (arc off) command from the robot control device 120.

When the program ends, the robot control device 120 and the welding power supply 140 are shut down in step S1110. When the program does not end, steps S1101 to S1110 are further repeated.

Further, in the present embodiment, by determining the short-circuit time ratio for each of the value of the frequency f, the peak current Ip, that is, the set current during the current non-reduction period $T_{IP}$, the base current Ib, that is, the set current during the current reduction period $T_{IB}$, the current non-reduction period $T_{IP}$ (which may be referred to as a "peak current period"), the current reduction period $T_{IB}$ (which may be referred to as a "base current period"), the forward feeding period $T_P$, and the backward feeding period $T_N$ under the conditions to be described in detail later, the bead appearance or the weldability become better, and a penetration amount is more easily obtained.

The set current during the current non-reduction period $T_{IP}$ or the set current during the current reduction period $T_{IB}$ is not limited to a constant current value, and the set value may be changed within each period. Therefore, an index showing a thermal energy of the entire current non-reduction period $T_{IP}$ or the entire current reduction period $T_{IB}$ is indicated by an average current during the current non-reduction period $T_{IP}$ or the current reduction period $T_{IB}$, the average current during the current non-reduction period $T_{IP}$ is denoted as $I_{P-AVG}$, and the average current during the current reduction period $T_{IB}$ is denoted as $I_{B-AVG}$.

Hereinafter, each control element will be described in detail.

(Frequency f: 50 Hz to 150 Hz)

It is preferred that a period obtained by combining the forward feeding period $T_P$ and the backward feeding period $T_N$ is set as one cycle, the frequency f is fixed, and the short-circuit time ratio is adjusted or controlled by causing a droplet formed at the tip of the welding wire to be stably detached or dropped. When the frequency is made variable, there is a possibility that the bead appearance or the penetration depth varies depending on the position for one welding length. The frequency f is preferably in the range of 50 Hz to 150 Hz as a condition for forming an optimum droplet size while maintaining the penetration performance. The frequency is more preferably 60 Hz to 130 Hz, and still more preferably 70 Hz to 120 Hz.

(Wave Height Wh: 14% to 35% with respect to Chip-to-Base Metal Distance)

As illustrated in FIG. 4, the wave height Wh, which is the change width of the tip position of the welding wire 100 between the uppermost end and the lowermost end, is within a range of 14% to 35% with respect to a chip-to-base metal distance. For example, when the chip-to-base metal distance is 25 mm, the range of the wave height Wh to be set is 3.5 mm to 8.75 mm. When the wave height Wh is within the range of 14% to 35% with respect to the chip-to-base metal distance, the penetration performance can be secured. The "reference distance" serving as a reference position of the wave height Wh or the amplitude Wf may be freely set.

The flatness of the bead contributes to the above frequency and wave height Wh. In the present embodiment, in particular, when the travel speed is high, these effects become remarkable, and it is preferred to achieve a balance between a low frequency and a high wave height Wh. Specifically, the ratio of <frequency f/wave height Wh> is preferably in the range of 10.0 to 25.0.

In the present embodiment, an average welding current $I_{AVG}$ of the current non-reduction period $T_{IP}$ and the current reduction period $T_{IB}$ as a whole is preferably in a range of 150 A to 300 A, and an average arc voltage $V_{AVG}$ of the current non-reduction period $T_{IP}$ and the current reduction period $T_{IB}$ as a whole is preferably 20 V to 40 V. An arc stability is determined based on the balance between the average welding current $I_{AVG}$ and the average arc voltage $V_{AVG}$. That is, the arc stability is determined based on $V_{AVG}/I_{AVG}$, which is the ratio of the average arc voltage $V_{AVG}$ to the average welding current $I_{AVG}$, and it is more preferred that the $V_{AVG}/I_{AVG}$ is within a range of 0.080 to 0.170, and a good arc stability can be obtained.

The quality of the arc stability affects the flatness of the bead or the weldability. As described above, the flatness of the bead is also affected by the frequency f and the wave height Wh. In the present embodiment, it was found that a better flatness of the bead can be obtained by setting or correcting various welding conditions so that the relation between a value of (arc voltage)/(welding current), which indicates the arc stability, and the frequency f and the amplitude Wf satisfies the following equation (2).

$$\text{arc voltage/(welding current)} \geq 0.0237 \times \text{(frequency/amplitude)} - 0.376...(2)$$

(Current Non-reduction Period $T_{IP}$ Occupies 2/3 or More of Forward Feeding Period $T_P$)

The current non-reduction period $T_{IP}$ needs to occupy 2/3 or more of the period during which the tip of the welding wire 100 moves from the uppermost end to the lowermost end. Here, the period during which the wire tip position moves from the uppermost end to the lowermost end indicates the forward feeding period $T_P$ as described above.

In wire feeding control using a short-circuit transfer method in the related art, a ratio of the current non-reduction period $T_{IP}$ during the forward feeding period $T_P$ is controlled to less than 1/2, thereby enabling low-spatter welding. However, as a result, an arc pressure does not act on the molten pool, resulting in a small penetration.

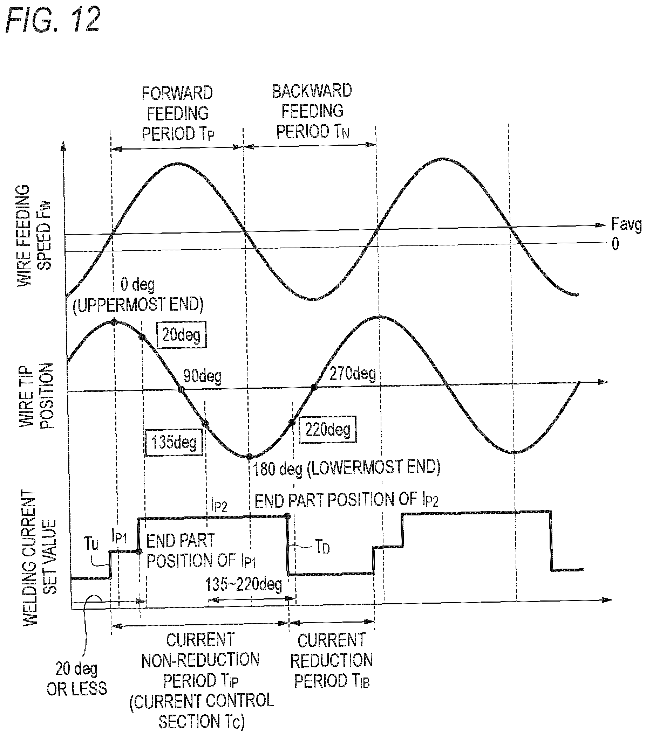

As illustrated in FIG. 12, it is preferred that the current non-reduction period $T_{IP}$ is divided into the rising section $T_U$ immediately after the current reduction period $T_{IB}$ during which the current changes from the base current to a predetermined current value, the falling section $T_D$ immediately before the current reduction period $T_{IB}$ during which the current changes from the predetermined current value to the base current, and a current control section $T_C$ other than the rising section $T_U$ and the falling section $T_D$.

For the purpose of adjusting a droplet size or promoting droplet detachment, a ratio of the rising section $T_U$ to the current non-reduction period $T_{IP}$, that is, a value of "(rising section $T_U$/current non-reduction period $T_{IP}$) $\times$ 100%" is preferably 20% or less. The rising of the welding current value in the rising section $T_U$ may be a steep change as illustrated in FIG. 12, in other words, the ratio of the rising section $T_U$ to the current non-reduction period $T_{IP}$ may be close to 0% without limitation.

For the purpose of adjusting a droplet size before the backward feeding is performed, it is preferred that a ratio of the falling section $T_D$ to the current non-reduction period $T_{IP}$, that is, a value of "(falling section $T_D$/current non-reduction period $T_{IP}$) $\times$ 100%" is 20% or less. The falling of the welding current value in the falling section $T_D$ may be a steep change as illustrated in FIG. 12, in other words, the ratio of the falling section $T_D$ to the current non-reduction period $T_{IP}$ may be close to 0% without limitation.

The rising section $T_U$ or the falling section $T_D$ may change in any of a linear shape, a curved shape, and a stepped shape, or may be a combination of these shapes.

Subsequently, as illustrated in FIG. 12, at least two welding current set values are preferably provided in the current control section $T_C$. Here, the two welding current set values are referred to as a first welding current set value $I_{P1}$ and a second welding current set value $I_{P2}$.

When a position at the uppermost end of the welding wire 100 is set to 0 deg as a reference, it is preferred to set an end part position of a range of the first welding current set value $I_{P1}$ in a range of 20 deg or less with a timing at which the first welding current set value $I_{P1}$ is set. By setting the end part position of the range of the first welding current set value $I_{P1}$ in the range of 20 deg or less, it is possible to reduce the shaking of a droplet started to be formed, and to maintain more stable detachment.

When the position at the uppermost end of the welding wire 100 is set to 0 deg as a reference, it is preferred to set an end part position of a range of the second welding current set value $I_{P2}$ in a range of 135 deg to 220 deg with a timing at which the second welding current set value $I_{P2}$ is set. By setting the end part position of the range of the second welding current set value $I_{P2}$ in the range of 135 deg to 220 deg, an arc pressure can effectively act on the molten pool, and when the short-circuit time ratio is increased, a stable penetration depth can also be obtained.

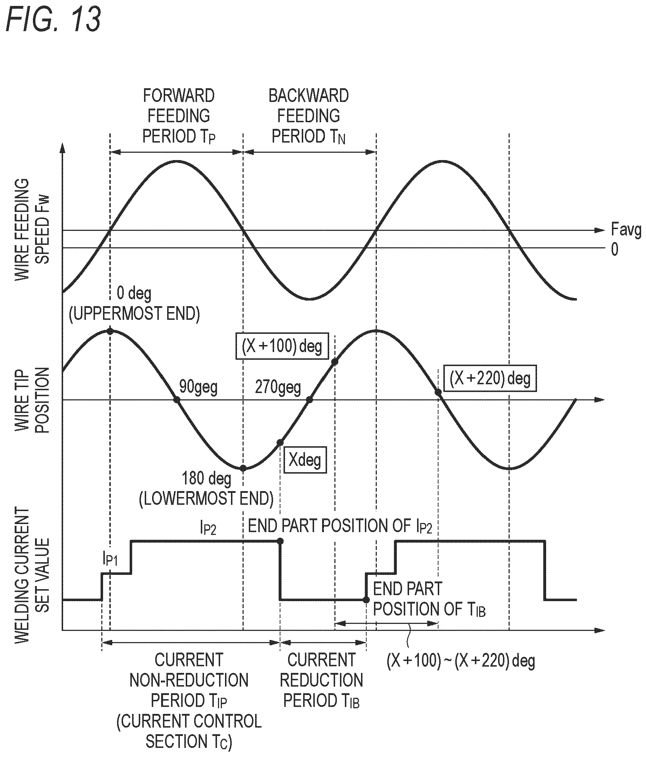

Furthermore, as illustrated in FIG. 13, when an end part of the range of the welding current set value $I_{P2}$ is set as an end part of the current control section $T_C$ and the end part position of the range of the welding current set value $I_{P2}$ is set at X deg, the end part position of the current reduction period $T_{IB}$ is preferably set in a range of (X + 100) deg to (X + 220) deg. By setting the end part position of the current reduction period $T_{IB}$ in the range of (X + 100) deg to (X + 220) deg, a timing at which a most inertial force is exerted is included within the current reduction period $T_{IB}$, which is preferable from the viewpoint of stabilizing droplet detachment.

The welding current set at the first welding current set value $I_{P1}$ is preferably in a range of 250 A to 600 A, and the welding current set at the second welding current set value $I_{P2}$ is preferably in a range of 300 A to 650 A. By setting the set current of the first welding current set value $I_{P1}$ and the set current of the second welding current set value $I_{P2}$ within the above ranges, it is possible to further enhance an effect obtained by providing the first welding current set value $I_{P1}$ and the second welding current set value $I_{P2}$.

The welding current set at the second welding current set value $I_{P2}$ is larger than the welding current set at the first welding current set value $I_{P1}$.

It is preferred to provide external properties of the welding power supply 140 during the current control section $T_C$, specifically, during the period between the first welding current set value $I_{P1}$ and the second welding current set value $I_{P2}$. More specifically, by setting the external properties of the welding power supply 140 within a range of 0.05 V/100 A to 20 V/100 A, the arc length is controlled to be substantially constant by changing the welding current even in a case in which a protrusion length changes during welding or the like.

The average current $I_{P-AVG}$ during the current non-reduction period $T_{IP}$ is preferably within a range of 300 A to 650 A and the average current $I_{B-AVG}$ during the current reduction period $T_{IB}$ is preferably within a range of 80 A to 150 A, from the viewpoint of adjusting a droplet size. In addition, the current non-reduction period $T_{IP}$ is preferably within a range of 3.0 ms to 12.0 ms, and the current reduction period $T_{IB}$ is preferably within a range of 2.0 ms to 9.0 ms, from the viewpoint of adjusting a droplet size.

Examples

Hereinafter, the present invention will be described more specifically with reference to Examples. The present invention is not limited to these Examples, and can be carried out by adding changes within the scope of the present invention, and all of which are included in the technical scope of the present invention.

<Common Welding Conditions>

Common welding conditions were as follows.

Welding wire: mild steel solid wire
Shielding gas: 100% $CO_2$
Base metal: SS400 (rolled steel material for general structure JIS G 3101: 2004)
Welding method: bead-on-plate
Travel speed of welding wire: 50 cm/min (normal speed) or 100 cm/min (high speed)
Feeding speed set value (= average feeding speed Favg): 7 m/min to 10 m/min (7 m/min, 8 m/min, 9 m/min, 10 m/min)

<Evaluation Method>

The flatness of the bead and the penetration performance were evaluated as follows, and the overall evaluation was performed.

As described above, the flatness of the bead was determined based on the ratio "h/w" of the bead height h to the bead width w. A case in which the h/w was 0.35 or less was evaluated as A (best quality), a case in which the h/w was more than 0.35 and 0.40 or less was evaluated as B (excellent), a case in which the h/w was more than 0.40 and 0.50 or less was evaluated as C (good), a case in which the h/w was more than 0.50 and 0.60 or less was evaluated as D (pass), and a case in which the h/w was 0.60 or more was evaluated as E (fail).

The penetration performance was determined based on the ratio "d/w" of the penetration depth d to the bead width w. A case in which the d/w was 0.35 or more was evaluated as A (excellent), a case in which the d/w was less than 0.35 and 0.30 or more was evaluated as B (good), a case in which the d/w was less than 0.30 and 0.28 or more was evaluated as C (pass), and a case in which the d/w was less than 0.28 was evaluated as D (fail).

Subsequently, the overall evaluation of the flatness of the bead and the penetration performance was as follows.

Overall evaluation A (best quality): both the h/w and the d/w are A
Overall evaluation B (excellent): the h/w and the d/w are a combination of A and B
Overall evaluation C (good): the h/w and the d/w are a combination of B and C, or the h/w and the d/w are a combination of A and C
Overall evaluation D (pass): the h/w is D
Overall evaluation E (fail): the h/w is E or the d/w is D

The test results are shown in Tables 1-1 to 4-4 together with the welding conditions other than the common test conditions. Tables 1-1 to 1-4 show the test results at a feeding speed of 7 m/min, Tables 2-1 to 2-4 show the test results at a feeding speed of 8 m/min, Tables 3-1 to 3-4 show the test results at a feeding speed of 9 m/min, and Tables 4-1 to 4-4 show the test results at a feeding speed of 10 m/min.

[Table 1-1]

| Test number | Set values | | | | | | Measurement results | | | Threshold value 1 | | | | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW +0.249) | Frequency/ amplitude | Arc voltage/feeding speed | Arc voltage/welding current | 0.0237 × (frequency/amplitude) - 0.376 |
| 1 | 7 | 90% | 15 | 50 | 70 | 5.3 | 208.3 | 23.3 | 0.282 | 0.298 | 13.2 | 3.329 | 0.112 | |
| 2 | 7 | 90% | 15 | 50 | 70 | 5 | 205.6 | 23.4 | 0.262 | 0.298 | 14.0 | 3.343 | 0.114 | - |
| 3 | 7 | 90% | 15 | 50 | 100 | 5 | 204.3 | 23.4 | 0.232 | 0.298 | 20.0 | 3.343 | 0.115 | - |
| 4 | 7 | 90% | 15 | 50 | 100 | 4.8 | 204.4 | 23.5 | 0.214 | 0.298 | 20.8 | 3.357 | 0.115 | - |
| 5 | 7 | 90% | 25 | 50 | 70 | 5.3 | 186.0 | 23.1 | 0.311 | 0.298 | 13.2 | 3.300 | 0.124 | - |
| 6 | 7 | 90% | 25 | 50 | 100 | 5 | 184.9 | 23.4 | 0.289 | 0.298 | 20.0 | 3.343 | 0.127 | - |
| 7 | 7 | 90% | 25 | 50 | 100 | 4.8 | 185.6 | 23.2 | 0.288 | 0.298 | 20.8 | 3.314 | 0.125 | - |
| 8 | 7 | 100% | 15 | 50 | 70 | 5.3 | 210.6 | 27.5 | 0.159 | 0.298 | 13.2 | 3.929 | 0.131 | - |
| 9 | 7 | 100% | 15 | 50 | 70 | 5 | 212.9 | 27.5 | 0.165 | 0.298 | 14.0 | 3.929 | 0.129 | - |
| 10 | 7 | 100% | 15 | 50 | 100 | 5 | 213.4 | 27.5 | 0.162 | 0.298 | 20.0 | 3.929 | 0.129 | - |
| 11 | 7 | 100% | 15 | 50 | 100 | 4.8 | 208.8 | 27.3 | 0.117 | 0.298 | 20.8 | 3.900 | 0.131 | - |
| 12 | 7 | 100% | 25 | 50 | 70 | 5.3 | 188.6 | 27.4 | 0.176 | 0.298 | 13.2 | 3.914 | 0.145 | - |
| 13 | 7 | 100% | 25 | 50 | 70 | 5 | 188.9 | 27.5 | 0.182 | 0.298 | 14.0 | 3.929 | 0.146 | - |
| 14 | 7 | 100% | 25 | 50 | 100 | 5 | 191.0 | 27.5 | 0.178 | 0.298 | 20.0 | 3.929 | 0.144 | - |
| 15 | 7 | 100% | 25 | 50 | 100 | 4.8 | 191.5 | 27.5 | 0.186 | 0.298 | 20.8 | 3.929 | 0.144 | - |
| 16 | 7 | 110% | 15 | 50 | 70 | 5.3 | 215.4 | 31.5 | 0.077 | 0.298 | 13.2 | 4.500 | 0.146 | - |
| 17 | 7 | 110% | 15 | 50 | 70 | 5 | 216.3 | 31.4 | 0.075 | 0.298 | 14.0 | 4.486 | 0.145 | - |
| 18 | 7 | 110% | 15 | 50 | 100 | 5 | 216.8 | 31.6 | 0.072 | 0.298 | 20.0 | 4.514 | 0.146 | - |
| 19 | 7 | 110% | 15 | 50 | 100 | 4.8 | 217.7 | 31.7 | 0.061 | 0.298 | 20.8 | 4.529 | 0.146 | - |
| 20 | 7 | 110% | 25 | 50 | 70 | 5.3 | 193.4 | 31.5 | 0.114 | 0.298 | 13.2 | 4.500 | 0.163 | - |

(continued)

| Test number | Set values | | | | | | Measurement results | | Threshold value 1 | | | | | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW +0.249) | Frequency/ amplitude | Arc voltage/feeding speed | Arc voltage/welding current | 0.0237 × (frequency/amplitude) - 0.376 |
| 21 | 7 | 110% | 25 | 50 | 70 | 5 | 193.8 | 31.3 | 0.117 | 0.298 | 14.0 | 4.471 | 0.162 | - |
| 22 | 7 | 110% | 25 | 50 | 100 | 5 | 193.1 | 31.5 | 0.121 | 0.298 | 20.0 | 4.500 | 0.163 | - |
| 23 | 7 | 110% | 25 | 50 | 100 | 4.8 | 193.6 | 31.5 | 0.120 | 0.298 | 20.8 | 4.500 | 0.163 | - |
| 24 | 7 | 100% | 15 | 50 | Uncertain | - | 211.2 | 21.7 | 0.282 | 0.298 | - | 3.100 | 0.103 | - |
| 25 | 7 | 110% | 15 | 50 | Uncertain | - | 203.2 | 23.6 | 0.235 | 0.298 | - | 3.371 | 0.116 | - |

[Table 1-2]

| Test number | Set values | | | | | | Measurement results | | | Threshold value 1 | Frequency/ amplitude | Arc voltage/feeding speed | Arc voltage/welding current | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | | | | 0.0237 × (frequency/amplitude) - 0.376 |
| 26 | 7 | 90% | 15 | 100 | 70 | 5.3 | 207.6 | 23.3 | 0.295 | 0.298 | 13.2 | 3.329 | 0.112 | -0.063 |
| 27 | 7 | 90% | 15 | 100 | 100 | 5 | 204.1 | 23.3 | 0.276 | 0.298 | 20.0 | 3.329 | 0.114 | 0.098 |
| 28 | 7 | 90% | 25 | 100 | 70 | 5 | 188.3 | 23.3 | 0.320 | 0.298 | 14.0 | 3.329 | 0.124 | -0.044 |
| 29 | 7 | 90% | 25 | 100 | 100 | 5 | 182.7 | 23.8 | 0.343 | 0.298 | 20.0 | 3.400 | 0.130 | 0.098 |
| 30 | 7 | 90% | 25 | 100 | 100 | 4.8 | 183.5 | 23.2 | 0.327 | 0.298 | 20.8 | 3.314 | 0.126 | 0.118 |
| 31 | 7 | 100% | 15 | 100 | 70 | 5 | 211.6 | 27.9 | 0.145 | 0.298 | 14.0 | 3.986 | 0.132 | -0.044 |
| 32 | 7 | 100% | 15 | 100 | 100 | 5 | 213.0 | 27.5 | 0.183 | 0.298 | 20.0 | 3.929 | 0.129 | 0.098 |
| 33 | 7 | 100% | 15 | 100 | 100 | 4.8 | 213.7 | 27.3 | 0.179 | 0.298 | 20.8 | 3.900 | 0.128 | 0.118 |
| 34 | 7 | 100% | 25 | 100 | 70 | 5.3 | 187.4 | 27.8 | 0.159 | 0.298 | 13.2 | 3.971 | 0.148 | -0.063 |
| 35 | 7 | 100% | 25 | 100 | 70 | 5 | 186.7 | 27.3 | 0.152 | 0.298 | 14.0 | 3.900 | 0.146 | -0.044 |
| 36 | 7 | 100% | 25 | 100 | 100 | 5 | 189.6 | 27.2 | 0.181 | 0.298 | 20.0 | 3.886 | 0.143 | 0.098 |
| 37 | 7 | 100% | 25 | 100 | 100 | 4.8 | 188.6 | 27.4 | 0.161 | 0.298 | 20.8 | 3.914 | 0.145 | 0.118 |
| 38 | 7 | 110% | 15 | 100 | 70 | 5.3 | 217.0 | 31.5 | 0.073 | 0.298 | 13.2 | 4.500 | 0.145 | -0.063 |
| 39 | 7 | 110% | 15 | 100 | 70 | 5 | 215.1 | 31.3 | 0.072 | 0.298 | 14.0 | 4.471 | 0.146 | -0.044 |
| 40 | 7 | 110% | 15 | 100 | 100 | 5 | 214.9 | 31.8 | 0.034 | 0.298 | 20.0 | 4.543 | 0.148 | 0.098 |
| 41 | 7 | 110% | 15 | 100 | 100 | 4.8 | 216.7 | 31.5 | 0.024 | 0.298 | 20.8 | 4.500 | 0.145 | 0.118 |
| 42 | 7 | 110% | 25 | 100 | 70 | 5.3 | 192.7 | 31.5 | 0.098 | 0.298 | 13.2 | 4.500 | 0.163 | -0.063 |
| 43 | 7 | 110% | 25 | 100 | 70 | 5 | 192.4 | 31.5 | 0.087 | 0.298 | 14.0 | 4.500 | 0.164 | -0.044 |
| 44 | 7 | 110% | 25 | 100 | 100 | 5 | 193.2 | 31.6 | 0.074 | 0.298 | 20.0 | 4.514 | 0.164 | 0.098 |
| 45 | 7 | 110% | 25 | 100 | 100 | 4.8 | 192.7 | 31.5 | 0.071 | 0.298 | 20.8 | 4.500 | 0.163 | 0.118 |
| 46 | 7 | 100% | 25 | 100 | Uncertain | - | 187.2 | 21.6 | 0.314 | 0.298 | - | 3.086 | 0.115 | - |

| Test number | Set values | | | | | | Measurement results | | | Threshold value 1 | | | | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | Frequency/amplitude | Arc voltage/feeding speed | Arc voltage/welding current | 0.0237 × (frequency/amplitude) - 0.376 |
| 47 | 7 | 90% | 25 | 100 | Uncertain | - | 195.5 | 19.4 | 0.419 | 0.298 | - | 2.771 | 0.099 | - |

[Table 1-3]

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 1 | 8.01 | 3.08 | 2.93 | 0.38 | B | 0.37 | A | B |
| 2 | 9.13 | 2.79 | 2.85 | 0.31 | A | 0.31 | B | B |
| 3 | 8.05 | 3.02 | 3.31 | 0.38 | B | 0.41 | A | B |
| 4 | 8.41 | 2.81 | 2.77 | 0.33 | A | 0.33 | B | B |
| 5 | 8.20 | 3.00 | 2.23 | 0.37 | B | 0.27 | D | E |
| 6 | 7.67 | 3.12 | 2.20 | 0.41 | C | 0.29 | C | C |
| 7 | 8.01 | 3.04 | 2.40 | 0.38 | B | 0.30 | B | C |
| 8 | 9.78 | 2.86 | 3.09 | 0.29 | A | 0.32 | B | B |
| 9 | 9.81 | 2.84 | 3.38 | 0.29 | A | 0.34 | B | B |
| 10 | 8.90 | 2.79 | 3.48 | 0.31 | A | 0.39 | A | A |
| 11 | 8.83 | 2.75 | 3.20 | 0.31 | A | 0.36 | A | A |
| 12 | 9.01 | 3.00 | 2.70 | 0.33 | A | 0.30 | B | B |
| 13 | 8.94 | 3.04 | 2.67 | 0.34 | A | 0.30 | B | B |
| 14 | 8.98 | 3.05 | 2.90 | 0.34 | A | 0.32 | B | B |
| 15 | 9.14 | 2.82 | 2.88 | 0.31 | A | 0.32 | B | B |
| 16 | 10.26 | 3.08 | 3.76 | 0.30 | A | 0.37 | A | A |
| 17 | 9.68 | 2.80 | 4.02 | 0.29 | A | 0.42 | A | A |
| 18 | 9.63 | 2.57 | 3.95 | 0.27 | A | 0.41 | A | A |
| 19 | 9.95 | 2.61 | 3.76 | 0.26 | A | 0.38 | A | A |
| 20 | 9.60 | 2.92 | 2.98 | 0.30 | A | 0.31 | B | B |
| 21 | 10.00 | 2.83 | 3.10 | 0.28 | A | 0.31 | B | B |
| 22 | 9.07 | 2.89 | 3.32 | 0.32 | A | 0.37 | A | A |
| 23 | 8.99 | 2.97 | 3.30 | 0.33 | A | 0.37 | A | A |
| 24 | 7.63 | 2.92 | 2.52 | 0.38 | B | 0.33 | B | C |
| 25 | 8.02 | 2.78 | 2.42 | 0.35 | A | 0.30 | B | B |

[Table 1-4]

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 26 | 6.23 | 2.30 | 1.96 | 0.37 | B | 0.31 | B | C |
| 27 | 6.59 | 2.14 | 1.94 | 0.32 | A | 0.29 | C | C |
| 28 | 5.82 | 2.11 | 1.35 | 0.36 | B | 0.23 | D | E |
| 29 | 6.18 | 2.16 | 0.77 | 0.35 | A | 0.12 | D | E |
| 30 | 5.28 | 2.59 | 0.91 | 0.49 | C | 0.17 | D | E |
| 31 | 6.58 | 1.99 | 2.16 | 0.30 | A | 0.33 | B | B |
| 32 | 6.29 | 2.07 | 2.47 | 0.33 | A | 0.39 | A | A |
| 33 | 6.03 | 2.07 | 2.78 | 0.34 | A | 0.46 | A | A |

(continued)

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 34 | 5.90 | 2.35 | 1.90 | 0.40 | C | 0.32 | B | C |
| 35 | 5.74 | 2.36 | 2.07 | 0.41 | C | 0.36 | A | C |
| 36 | 6.14 | 2.15 | 2.04 | 0.35 | A | 0.33 | B | B |
| 37 | 6.00 | 2.15 | 2.19 | 0.36 | B | 0.37 | A | B |
| 38 | 6.62 | 1.94 | 2.50 | 0.29 | A | 0.38 | A | A |
| 39 | 6.83 | 2.39 | 2.70 | 0.35 | A | 0.40 | A | A |
| 40 | 6.83 | 1.88 | 2.53 | 0.28 | A | 0.37 | A | A |
| 41 | 6.49 | 2.21 | 2.82 | 0.34 | A | 0.43 | A | A |
| 42 | 6.14 | 2.55 | 2.31 | 0.42 | C | 0.38 | A | C |
| 43 | 6.57 | 2.19 | 2.36 | 0.33 | A | 0.36 | A | A |
| 44 | 6.59 | 2.07 | 2.20 | 0.31 | A | 0.33 | B | B |
| 45 | 6.53 | 2.07 | 2.26 | 0.32 | A | 0.35 | A | A |
| 46 | 5.29 | 2.38 | 1.22 | 0.45 | C | 0.23 | D | E |
| 47 | 4.77 | 2.43 | 1.03 | 0.51 | D | 0.22 | D | E |

First, Tables 1-1 to 1-4 showing the test results at the feeding speed of 7 m/min will be described.

As shown in Tables 1-1 to 1-4, in all of Tests No. 5, No. 28, No. 29, No. 30, No. 46, and No. 47, the short-circuit time ratio exceeded a threshold value 1 obtained according to Expression (1), and thus the d/w was as small as less than 0.28, that is, the penetration depth became shallow and was evaluated as D, and as a result, the overall evaluation was E of fail.

In the other tests, the short-circuit time ratio and the value of the arc voltage/welding current satisfied both the threshold value 1 and a threshold value 2 obtained according to Equation (2), and thus the d/w was evaluated as C, B, and A from the group in which the short-circuit time ratio was close to the threshold value 1, and the h/w was evaluated as A, B, C, and D in descending order from the group having a large arc voltage/welding current.

Among them, in particular, in Tests No. 10, No. 11, Nos. 16 to 19, No. 22, No. 23, No. 32, No. 33, Nos. 38 to 41, and No. 43, the d/w and the h/w were all evaluated as A, and as a result, the overall evaluation was A of best quality.

The tests other than the overall evaluations A and E were collectively evaluated as B and C based on the above criteria.

Next, Tables 2-1 to 2-4, which are test results at a feeding speed of 8 m/min, will be described.

[Table 2-1]

| Test number | Set values | | | | | | Measurement results | | | Threshold value 1 | Frequency/amplitude | Arc voltage/feeding speed | Arc voltage/welding current | Threshold value 2 |
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | | | | 0.0237 × (frequency/amplitude) - 0.376 |
|---|---|---|---|---|---|---|---|---|---|---|---|---|---|---|
| 48 | 8 | 90% | 15 | 50 | 70 | 5.3 | 225.4 | 24.4 | 0.244 | 0.305 | 13.2 | 3.050 | 0.108 | - |
| 49 | 8 | 90% | 15 | 50 | 70 | 5 | 224.1 | 24.4 | 0.220 | 0.305 | 14.0 | 3.050 | 0.109 | - |
| 50 | 8 | 90% | 15 | 50 | 100 | 5 | 225.4 | 24.2 | 0.202 | 0.305 | 20.0 | 3.025 | 0.107 | - |
| 51 | 8 | 90% | 15 | 50 | 100 | 4.8 | 226.1 | 24.4 | 0.205 | 0.305 | 20.8 | 3.050 | 0.108 | - |
| 52 | 8 | 90% | 25 | 50 | 70 | 5.3 | 201.5 | 24.4 | 0.295 | 0.305 | 13.2 | 3.050 | 0.121 | - |
| 53 | 8 | 90% | 25 | 50 | 70 | 5 | 200.6 | 24.4 | 0.290 | 0.305 | 14.0 | 3.050 | 0.122 | - |
| 54 | 8 | 90% | 25 | 50 | 100 | 5 | 201.6 | 24.4 | 0.261 | 0.305 | 20.0 | 3.050 | 0.121 | - |
| 55 | 8 | 90% | 25 | 50 | 100 | 4.8 | 202.1 | 24.5 | 0.254 | 0.305 | 20.8 | 3.063 | 0.121 | - |
| 56 | 8 | 100% | 15 | 50 | 70 | 5.3 | 227.6 | 28.3 | 0.154 | 0.305 | 13.2 | 3.538 | 0.124 | - |
| 57 | 8 | 100% | 15 | 50 | 70 | 5 | 229.9 | 28.2 | 0.155 | 0.305 | 14.0 | 3.525 | 0.123 | - |
| 58 | 8 | 100% | 15 | 50 | 100 | 5 | 231.5 | 28.4 | 0.174 | 0.305 | 20.0 | 3.550 | 0.123 | - |
| 59 | 8 | 100% | 15 | 50 | 100 | 4.8 | 230.8 | 28.3 | 0.172 | 0.305 | 20.8 | 3.538 | 0.123 | - |
| 60 | 8 | 100% | 25 | 50 | 70 | 5.3 | 203.5 | 28.4 | 0.176 | 0.305 | 13.2 | 3.550 | 0.140 | - |
| 61 | 8 | 100% | 25 | 50 | 70 | 5 | 204.1 | 28.3 | 0.187 | 0.305 | 14.0 | 3.538 | 0.139 | - |
| 62 | 8 | 100% | 25 | 50 | 100 | 5 | 203.5 | 28.3 | 0.183 | 0.305 | 20.0 | 3.538 | 0.139 | - |
| 63 | 8 | 100% | 25 | 50 | 100 | 4.8 | 199.8 | 28.4 | 0.181 | 0.305 | 20.8 | 3.550 | 0.142 | - |
| 64 | 8 | 110% | 15 | 50 | 70 | 5.3 | 232.5 | 32.5 | 0.067 | 0.305 | 13.2 | 4.063 | 0.140 | - |
| 65 | 8 | 110% | 15 | 50 | 70 | 5 | 234.5 | 32.6 | 0.054 | 0.305 | 14.0 | 4.075 | 0.139 | - |
| 66 | 8 | 110% | 15 | 50 | 100 | 5 | 232.7 | 32.5 | 0.055 | 0.305 | 20.0 | 4.063 | 0.140 | - |
| 67 | 8 | 110% | 15 | 50 | 100 | 4.8 | 233.5 | 32.5 | 0.046 | 0.305 | 20.8 | 4.063 | 0.139 | - |

(continued)

| Test number | Set values | | | | | | Measurement results | | | Threshold value 1 | Frequency/ amplitude | Arc voltage/feeding speed | Arc voltage/weldin g current | Threshold value 2 |
| | Feeding speed [mpm] | Voltage | Protrusio n [mm] | Travel speed [cmpm] | Frequencyf [Hz] | Amplitude Wf [mm] | Average current [A] | Average voltage [V] | Short-circuit time ratio (0.295 or less) | Threshold value of short-circuit time ratio (0.007 × FW + 0.249) | | | | 0.0237 × (frequency/ampl itude) - 0.376 |
| 68 | 8 | 110% | 25 | 50 | 70 | 5.3 | 207.1 | 32.5 | 0.095 | 0.305 | 13.2 | 4.063 | 0.157 | - |
| 69 | 8 | 110% | 25 | 50 | 70 | 5 | 208.2 | 32.3 | 0.098 | 0.305 | 14.0 | 4.038 | 0.155 | - |
| 70 | 8 | 110% | 25 | 50 | 100 | 5 | 206.7 | 32.4 | 0.110 | 0.305 | 20.0 | 4.050 | 0.157 | - |
| 71 | 8 | 110% | 25 | 50 | 100 | 4.8 | 206.5 | 32.6 | 0.085 | 0.305 | 20.8 | 4.075 | 0.158 | - |

[Table 2-2]

| Test number | Set values | | | | | | Measurement results | | | Threshold value 1 | | | | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | Frequency/amplitude | Arc voltage/feeding speed | Arc voltage/welding current | 0.0237 × (frequency/amplitude) - 0.376 |
| 72 | 8 | 90% | 15 | 100 | 70 | 5.3 | 225.5 | 24.4 | 0.272 | 0.305 | 13.2 | 3.050 | 0.108 | -0.063 |
| 73 | 8 | 90% | 15 | 100 | 70 | 5 | 224.0 | 24.5 | 0.267 | 0.305 | 14.0 | 3.063 | 0.109 | -0.044 |
| 74 | 8 | 90% | 15 | 100 | 100 | 5 | 228.4 | 24.4 | 0.265 | 0.305 | 20.0 | 3.050 | 0.107 | 0.098 |
| 75 | 8 | 90% | 15 | 100 | 100 | 4.8 | 221.6 | 24.5 | 0.240 | 0.305 | 20.8 | 3.063 | 0.111 | 0.118 |
| 76 | 8 | 90% | 25 | 100 | 70 | 5.3 | 203.4 | 24.2 | 0.300 | 0.305 | 13.2 | 3.025 | 0.119 | -0.063 |
| 77 | 8 | 90% | 25 | 100 | 70 | 5 | 201.6 | 24.5 | 0.294 | 0.305 | 14.0 | 3.063 | 0.122 | -0.044 |
| 78 | 8 | 90% | 25 | 100 | 100 | 4.8 | 201.9 | 24.3 | 0.282 | 0.305 | 20.8 | 3.038 | 0.120 | 0.118 |
| 79 | 8 | 100% | 15 | 100 | 70 | 5.3 | 227.3 | 28.4 | 0.150 | 0.305 | 13.2 | 3.550 | 0.125 | -0.063 |
| 80 | 8 | 100% | 15 | 100 | 70 | 5 | 228.4 | 28.4 | 0.150 | 0.305 | 14.0 | 3.550 | 0.124 | 0.044 |
| 81 | 8 | 100% | 25 | 100 | 70 | 5.3 | 202.8 | 28.2 | 0.171 | 0.305 | 13.2 | 3.525 | 0.139 | -0.063 |
| 82 | 8 | 100% | 25 | 100 | 70 | 5 | 205.3 | 28.4 | 0.184 | 0.305 | 14.0 | 3.550 | 0.138 | -0.044 |
| 83 | 8 | 100% | 25 | 100 | 100 | 5 | 202.3 | 28.4 | 0.187 | 0.305 | 20.0 | 3.550 | 0.140 | 0.098 |
| 84 | 8 | 100% | 25 | 100 | 100 | 4.8 | 205.5 | 28.3 | 0.188 | 0.305 | 20.8 | 3.538 | 0.138 | 0.118 |
| 85 | 8 | 110% | 15 | 100 | 70 | 5.3 | 236.6 | 32.4 | 0.078 | 0.305 | 13.2 | 4.050 | 0.137 | -0.063 |
| 86 | 8 | 110% | 15 | 100 | 70 | 5 | 237.6 | 32.4 | 0.061 | 0.305 | 14.0 | 4.050 | 0.136 | -0.044 |
| 87 | 8 | 110% | 15 | 100 | 100 | 5 | 232.7 | 32.5 | 0.051 | 0.305 | 20.0 | 4.063 | 0.140 | 0.098 |
| 88 | 8 | 110% | 15 | 100 | 100 | 4.8 | 231.8 | 32.4 | 0.026 | 0.305 | 20.8 | 4.050 | 0.140 | 0.118 |
| 89 | 8 | 110% | 25 | 100 | 70 | 5.3 | 207.5 | 32.5 | 0.109 | 0.305 | 13.2 | 4.063 | 0.157 | -0.063 |
| 90 | 8 | 110% | 25 | 100 | 70 | 5 | 208.5 | 32.1 | 0.084 | 0.305 | 14.0 | 4.013 | 0.154 | -0.044 |
| 91 | 8 | 110% | 25 | 100 | 100 | 5 | 206.0 | 32.5 | 0.106 | 0.305 | 20.0 | 4.063 | 0.158 | 0.098 |

27

EP 4 509 254 A1

| Test number | Set values | | | | | | Measurement results | | | Threshold value 1 | | | | Threshold value 2 |
| --- | --- | --- | --- | --- | --- | --- | --- | --- | --- | --- | --- | --- | --- | --- |
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | Frequency/amplitude | Arc voltage/feeding speed | Arc voltage/welding current | 0.0237 × (frequency/amplitude) - 0.376 |
| 92 | 8 | 110% | 25 | 100 | 100 | 4.8 | 207.3 | 32.0 | 0.106 | 0.305 | 20.8 | 4.000 | 0.154 | 0.118 |

[Table 2-3]

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 48 | 9.09 | 3.29 | 3.07 | 0.36 | B | 0.34 | B | C |
| 49 | 8.48 | 3.23 | 3.41 | 0.38 | B | 0.40 | A | B |
| 50 | 8.55 | 3.13 | 3.30 | 0.37 | B | 0.39 | A | B |
| 51 | 8.22 | 3.25 | 3.60 | 0.40 | B | 0.44 | A | B |
| 52 | 8.56 | 3.23 | 2.68 | 0.38 | B | 0.31 | B | C |
| 53 | 8.56 | 3.23 | 3.06 | 0.38 | B | 0.36 | A | B |
| 54 | 8.21 | 3.25 | 2.83 | 0.40 | B | 0.34 | B | C |
| 55 | 8.32 | 3.14 | 3.14 | 0.38 | B | 0.38 | A | B |
| 56 | 9.94 | 3.14 | 3.98 | 0.32 | A | 0.40 | A | A |
| 57 | 9.88 | 3.09 | 4.00 | 0.31 | A | 0.40 | A | A |
| 58 | 9.08 | 3.18 | 4.07 | 0.35 | A | 0.45 | A | A |
| 59 | 9.38 | 2.88 | 4.20 | 0.31 | A | 0.45 | A | A |
| 60 | 9.39 | 3.22 | 3.06 | 0.34 | A | 0.33 | B | B |
| 61 | 9.43 | 3.14 | 3.14 | 0.33 | A | 0.33 | B | B |
| 62 | 8.62 | 3.34 | 3.57 | 0.39 | B | 0.41 | A | B |
| 63 | 8.68 | 3.25 | 3.55 | 0.37 | B | 0.41 | A | B |
| 64 | 10.06 | 3.14 | 4.10 | 0.31 | A | 0.41 | A | A |
| 65 | 10.08 | 2.53 | 4.18 | 0.25 | A | 0.41 | A | A |
| 66 | 9.75 | 3.09 | 4.29 | 0.32 | A | 0.44 | A | A |
| 67 | 9.67 | 3.10 | 4.20 | 0.32 | A | 0.43 | A | A |
| 68 | 9.66 | 3.18 | 3.72 | 0.33 | A | 0.39 | A | A |
| 69 | 9.84 | 3.15 | 3.49 | 0.32 | A | 0.35 | A | A |
| 70 | 9.32 | 3.07 | 3.71 | 0.33 | A | 0.40 | A | A |
| 71 | 9.20 | 3.26 | 3.91 | 0.35 | A | 0.43 | A | A |

[Table 2-4]

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 72 | 6.08 | 2.25 | 2.41 | 0.37 | B | 0.40 | A | B |
| 73 | 6.60 | 2.18 | 2.45 | 0.33 | A | 0.37 | A | A |
| 74 | 6.38 | 2.06 | 2.47 | 0.32 | A | 0.39 | A | A |
| 75 | 5.16 | 2.79 | 2.46 | 0.54 | D | 0.48 | A | D |
| 76 | 5.69 | 2.08 | 1.80 | 0.37 | B | 0.32 | B | C |
| 77 | 5.86 | 2.24 | 2.11 | 0.38 | B | 0.36 | A | B |
| 78 | 6.31 | 2.04 | 1.88 | 0.32 | A | 0.30 | B | B |
| 79 | 7.06 | 2.25 | 2.80 | 0.32 | A | 0.40 | A | A |
| 80 | 7.17 | 2.16 | 2.71 | 0.30 | A | 0.38 | A | A |

(continued)

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 81 | 6.42 | 2.20 | 2.40 | 0.34 | A | 0.37 | A | A |
| 82 | 6.95 | 2.13 | 2.18 | 0.31 | A | 0.31 | B | B |
| 83 | 6.55 | 2.01 | 2.44 | 0.31 | A | 0.37 | A | A |
| 84 | 5.86 | 2.29 | 2.61 | 0.39 | A | 0.45 | A | A |
| 85 | 7.41 | 1.74 | 2.79 | 0.23 | A | 0.38 | A | A |
| 86 | 7.77 | 2.27 | 2.90 | 0.29 | A | 0.37 | A | A |
| 87 | 7.88 | 1.96 | 2.96 | 0.25 | A | 0.38 | A | A |
| 88 | 7.14 | 1.95 | 3.03 | 0.27 | A | 0.42 | A | A |
| 89 | 6.96 | 2.01 | 2.40 | 0.29 | A | 0.34 | B | B |
| 90 | 6.87 | 2.20 | 2.38 | 0.32 | A | 0.35 | A | A |
| 91 | 6.90 | 2.51 | 2.65 | 0.36 | B | 0.38 | A | B |
| 92 | 6.78 | 2.33 | 2.56 | 0.34 | A | 0.38 | A | A |

As shown in Tables 2-1 to 2-4, in Test No. 75, the value of the arc voltage/welding current was equal to or less than the threshold value 2, the h/w was evaluated as D, and the d/w was evaluated as A, and thus the overall evaluation was D of a minimum pass line.

In the other tests, the short-circuit time ratio and the value of the arc voltage/welding current satisfied both the threshold value 1 and the threshold value 2, and thus the d/w was evaluated as B and A from the group in which the short-circuit time ratio was close to the threshold value 1, and the h/w was evaluated as A, B, and D from the group having a large arc voltage/welding current.

Among them, in Tests Nos. 56 to 59, Nos. 64 to 71, Nos. 73 and 74, Nos. 79 to 81, Nos. 83 to 88, No. 90, and No. 92, the d/w and the h/w were all evaluated as A, and as a result, the overall evaluation also was A of best quality.

The tests other than the overall evaluations A and D were collectively evaluated as B and C based on the above criteria.

Subsequently, Tables 3-1 to 3-4, which are test results at a feeding speed of 9 m/min, will be described.

[Table 3-1]

| Test number | Set values | | | | | | Measurement results | | | Threshold value 1 | Frequency/ amplitude | Arc voltage/feeding speed | Arc voltage/welding current | Threshold value 2 |
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | | | | 0.0237 × (frequency/amplitude) - 0.376 |
|---|---|---|---|---|---|---|---|---|---|---|---|---|---|---|
| 93 | 9 | 90% | 15 | 50 | 70 | 5.3 | 240.7 | 24.4 | 0.271 | 0.312 | 13.2 | 2.711 | 0.101 | - |
| 94 | 9 | 90% | 15 | 50 | 70 | 5 | 240.1 | 24.1 | 0.264 | 0.312 | 14.0 | 2.678 | 0.100 | - |
| 95 | 9 | 90% | 15 | 50 | 100 | 5 | 241.0 | 24.4 | 0.258 | 0.312 | 20.0 | 2.711 | 0.101 | - |
| 96 | 9 | 90% | 15 | 50 | 100 | 4.8 | 241.1 | 24.4 | 0.260 | 0.312 | 20.8 | 2.711 | 0.101 | - |
| 97 | 9 | 90% | 25 | 50 | 70 | 5.3 | 214.3 | 24.5 | 0.299 | 0.312 | 13.2 | 2.722 | 0.114 | - |
| 98 | 9 | 90% | 25 | 50 | 70 | 5 | 247.6 | 24.5 | 0.312 | 0.312 | 14.0 | 2.722 | 0.099 | - |
| 99 | 9 | 90% | 25 | 50 | 100 | 5 | 212.9 | 24.3 | 0.281 | 0.312 | 20.0 | 2.700 | 0.114 | - |
| 100 | 9 | 90% | 25 | 50 | 100 | 4.8 | 213.3 | 24.4 | 0.278 | 0.312 | 20.8 | 2.711 | 0.114 | - |
| 101 | 9 | 100% | 15 | 50 | 70 | 5.3 | 243.1 | 28.4 | 0.142 | 0.312 | 13.2 | 3.156 | 0.117 | - |
| 102 | 9 | 100% | 15 | 50 | 70 | 5 | 246.8 | 28.4 | 0.160 | 0.312 | 14.0 | 3.156 | 0.115 | - |
| 103 | 9 | 100% | 15 | 50 | 100 | 5 | 240.7 | 28.3 | 0.158 | 0.312 | 20.0 | 3.144 | 0.118 | - |
| 104 | 9 | 100% | 15 | 50 | 100 | 4.8 | 242.3 | 28.6 | 0.180 | 0.312 | 20.8 | 3.178 | 0.118 | - |
| 105 | 9 | 100% | 25 | 50 | 70 | 5.3 | 215.2 | 28.3 | 0.182 | 0.312 | 13.2 | 3.144 | 0.132 | - |
| 106 | 9 | 100% | 25 | 50 | 70 | 5 | 218.1 | 28.3 | 0.178 | 0.312 | 14.0 | 3.144 | 0.130 | - |
| 107 | 9 | 100% | 25 | 50 | 100 | 5 | 214.9 | 28.4 | 0.196 | 0.312 | 20.0 | 3.156 | 0.132 | - |
| 108 | 9 | 100% | 25 | 50 | 100 | 4.8 | 215.2 | 28.4 | 0.182 | 0.312 | 20.8 | 3.156 | 0.132 | - |
| 109 | 9 | 110% | 15 | 50 | 70 | 5.3 | 247.3 | 32.1 | 0.077 | 0.312 | 13.2 | 3.567 | 0.130 | - |
| 110 | 9 | 110% | 15 | 50 | 70 | 5 | 249.8 | 32.6 | 0.056 | 0.312 | 14.0 | 3.622 | 0.131 | - |
| 111 | 9 | 110% | 15 | 50 | 100 | 5 | 248.8 | 32.6 | 0.089 | 0.312 | 20.0 | 3.622 | 0.131 | - |
| 112 | 9 | 110% | 15 | 50 | 100 | 4.8 | 251.6 | 32.6 | 0.070 | 0.312 | 20.8 | 3.622 | 0.130 | - |

(continued)

| Test number | Set values | | | | | | Measurement results | | | Threshold value 1 | | | | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | Frequency/amplitude | Arc voltage/feeding speed | Arc voltage/welding current | 0.0237 × (frequency/amplitude) - 0.376 |
| 113 | 9 | 110% | 25 | 50 | 70 | 5.3 | 220.7 | 32.6 | 0.102 | 0.312 | 13.2 | 3.622 | 0.148 | - |
| 114 | 9 | 110% | 25 | 50 | 70 | 5 | 220.6 | 32.4 | 0.084 | 0.312 | 14.0 | 3.600 | 0.147 | - |
| 115 | 9 | 110% | 25 | 50 | 100 | 5 | 218.8 | 32.5 | 0.097 | 0.312 | 20.0 | 3.611 | 0.149 | - |
| 116 | 9 | 110% | 25 | 50 | 100 | 4.8 | 217.0 | 32.6 | 0.095 | 0.312 | 20.8 | 3.622 | 0.150 | - |

[Table 3-2]

| Test number | Set values | | | | | | Measurement results | | | Threshold value 1 | Frequency/ amplitude | Arc voltage/feeding speed | Arc voltage/welding current | Threshold value 2 |
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | | | | 0.0237 × (frequency/amplitude) - 0.376 |
|---|---|---|---|---|---|---|---|---|---|---|---|---|---|---|
| 117 | 9 | 90% | 15 | 100 | 70 | 5.3 | 243.5 | 24.3 | 0.297 | 0.312 | 13.2 | 2.700 | 0.100 | -0.063 |
| 118 | 9 | 90% | 15 | 100 | 70 | 5 | 241.6 | 24.6 | 0.291 | 0.312 | 14.0 | 2.733 | 0.102 | -0.044 |
| 119 | 9 | 90% | 15 | 100 | 100 | 5 | 239.7 | 24.6 | 0.269 | 0.312 | 20.0 | 2.733 | 0.103 | 0.098 |
| 120 | 9 | 90% | 15 | 100 | 100 | 4.8 | 240.2 | 24.4 | 0.263 | 0.312 | 20.8 | 2.711 | 0.102 | 0.118 |
| 121 | 9 | 90% | 25 | 100 | 70 | 5.3 | 215.7 | 24.5 | 0.312 | 0.312 | 13.2 | 2.722 | 0.114 | -0.063 |
| 122 | 9 | 90% | 25 | 100 | 70 | 5 | 216.0 | 24.4 | 0.313 | 0.312 | 14.0 | 2.711 | 0.113 | -0.044 |
| 123 | 9 | 90% | 25 | 100 | 100 | 5 | 214.4 | 24.2 | 0.309 | 0.312 | 20.0 | 2.689 | 0.113 | 0.098 |
| 124 | 9 | 90% | 25 | 100 | 100 | 4.8 | 215.3 | 24.3 | 0.282 | 0.312 | 20.8 | 2.700 | 0.113 | 0.118 |
| 125 | 9 | 100% | 15 | 100 | 70 | 5.3 | 243.1 | 28.3 | 0.162 | 0.312 | 13.2 | 3.144 | 0.116 | -0.063 |
| 126 | 9 | 100% | 15 | 100 | 70 | 5 | 242.3 | 28.7 | 0.125 | 0.312 | 14.0 | 3.189 | 0.118 | -0.044 |
| 127 | 9 | 100% | 15 | 100 | 100 | 5 | 239.9 | 28.4 | 0.163 | 0.312 | 20.0 | 3.156 | 0.118 | 0.098 |
| 128 | 9 | 100% | 15 | 100 | 100 | 4.8 | 241.1 | 28.5 | 0.127 | 0.312 | 20.8 | 3.167 | 0.118 | 0.118 |
| 129 | 9 | 100% | 25 | 100 | 70 | 5.3 | 213.0 | 28.3 | 0.180 | 0.312 | 13.2 | 3.144 | 0.133 | -0.063 |
| 130 | 9 | 100% | 25 | 100 | 70 | 5 | 217.5 | 28.3 | 0.198 | 0.312 | 14.0 | 3.144 | 0.130 | -0.044 |
| 131 | 9 | 100% | 25 | 100 | 100 | 5 | 215.7 | 28.4 | 0.180 | 0.312 | 20.0 | 3.156 | 0.132 | 0.098 |
| 132 | 9 | 100% | 25 | 100 | 100 | 4.8 | 214.7 | 28.3 | 0.148 | 0.312 | 20.8 | 3.144 | 0.132 | 0.118 |
| 133 | 9 | 110% | 15 | 100 | 70 | 5.3 | 253.1 | 32.6 | 0.090 | 0.312 | 13.2 | 3.622 | 0.129 | -0.063 |
| 134 | 9 | 110% | 15 | 100 | 70 | 5 | 251.4 | 32.9 | 0.052 | 0.312 | 14.0 | 3.656 | 0.131 | -0.044 |
| 135 | 9 | 110% | 15 | 100 | 100 | 5 | 249.1 | 32.7 | 0.043 | 0.312 | 20.0 | 3.633 | 0.131 | 0.098 |
| 136 | 9 | 110% | 15 | 100 | 100 | 4.8 | 250.5 | 32.5 | 0.054 | 0.312 | 20.8 | 3.611 | 0.130 | 0.118 |

(continued)

| Test number | Set values | | | | | | Measurement results | | | Threshold value 1 | | | | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | Frequency/ amplitude | Arc voltage/feeding speed | Arc voltage/welding current | 0.0237 × (frequency/amplitude) - 0.376 |
| 137 | 9 | 110% | 25 | 100 | 70 | 5.3 | 220.3 | 32.3 | 0.124 | 0.312 | 13.2 | 3.589 | 0.147 | -0.063 |
| 138 | 9 | 110% | 25 | 100 | 70 | 5 | 222.0 | 32.5 | 0.082 | 0.312 | 14.0 | 3.611 | 0.146 | -0.044 |
| 139 | 9 | 110% | 25 | 100 | 100 | 5 | 221.1 | 32.5 | 0.124 | 0.312 | 20.0 | 3.611 | 0.147 | 0.098 |
| 140 | 9 | 110% | 25 | 100 | 100 | 4.8 | 221.0 | 32.4 | 0.113 | 0.312 | 20.8 | 3.600 | 0.147 | 0.118 |

[Table 3-3]

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 93 | 9.77 | 3.53 | 3.68 | 0.36 | B | 0.38 | A | B |
| 94 | 9.57 | 3.43 | 3.74 | 0.36 | B | 0.39 | A | B |
| 95 | 9.49 | 3.41 | 3.67 | 0.36 | B | 0.39 | A | B |
| 96 | 9.22 | 3.48 | 3.91 | 0.38 | B | 0.42 | A | B |
| 97 | 9.20 | 3.65 | 3.18 | 0.40 | B | 0.35 | A | B |
| 98 | 11.50 | 4.51 | 4.18 | 0.39 | B | 0.36 | A | B |
| 99 | 8.67 | 3.50 | 3.10 | 0.40 | B | 0.36 | A | B |
| 100 | 8.74 | 3.58 | 3.01 | 0.41 | C | 0.34 | B | C |
| 101 | 10.14 | 3.29 | 4.08 | 0.32 | A | 0.40 | A | A |
| 102 | 10.55 | 3.19 | 4.29 | 0.30 | A | 0.41 | A | A |
| 103 | 9.21 | 3.31 | 4.75 | 0.36 | B | 0.52 | A | B |
| 104 | 9.45 | 3.37 | 4.39 | 0.36 | B | 0.46 | A | B |
| 105 | 9.41 | 3.32 | 3.67 | 0.35 | A | 0.39 | A | A |
| 106 | 9.82 | 3.42 | 3.71 | 0.35 | A | 0.38 | A | A |
| 107 | 9.05 | 3.56 | 3.73 | 0.39 | B | 0.41 | A | B |
| 108 | 9.10 | 3.49 | 3.68 | 0.38 | B | 0.40 | A | B |
| 109 | 9.86 | 3.53 | 4.82 | 0.36 | B | 0.49 | A | B |
| 110 | 9.95 | 3.25 | 4.87 | 0.33 | A | 0.49 | A | A |
| 111 | 9.51 | 3.18 | 4.65 | 0.33 | A | 0.49 | A | A |
| 112 | 9.65 | 3.22 | 4.58 | 0.33 | A | 0.47 | A | A |
| 113 | 9.72 | 3.41 | 3.93 | 0.35 | A | 0.40 | A | A |
| 114 | 9.97 | 3.76 | 3.84 | 0.38 | B | 0.39 | A | B |
| 115 | 9.48 | 3.60 | 4.07 | 0.38 | B | 0.43 | A | B |
| 116 | 9.34 | 3.34 | 4.08 | 0.36 | B | 0.44 | A | B |

[Table 3-4]

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 117 | 6.89 | 2.45 | 2.57 | 0.36 | B | 0.37 | A | B |
| 118 | 6.75 | 2.47 | 2.51 | 0.37 | B | 0.37 | A | B |
| 119 | 5.33 | 2.52 | 2.92 | 0.47 | C | 0.55 | A | C |
| 120 | 6.04 | 3.14 | 3.03 | 0.52 | D | 0.50 | A | D |
| 121 | 5.99 | 2.04 | 1.98 | 0.34 | A | 0.33 | B | B |
| 122 | 7.23 | 2.54 | 1.87 | 0.35 | A | 0.26 | D | E |
| 123 | 6.86 | 2.45 | 2.02 | 0.36 | B | 0.29 | C | C |
| 124 | 5.56 | 2.88 | 2.20 | 0.52 | D | 0.40 | A | D |
| 125 | 7.01 | 2.29 | 2.94 | 0.33 | A | 0.42 | A | A |

(continued)

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 126 | 5.81 | 2.80 | 3.30 | 0.48 | C | 0.57 | A | C |
| 127 | 5.92 | 2.81 | 3.29 | 0.47 | C | 0.56 | A | C |
| 128 | 5.24 | 2.67 | 3.54 | 0.51 | D | 0.68 | A | D |
| 129 | 6.13 | 3.05 | 2.72 | 0.50 | C | 0.44 | A | C |
| 130 | 6.95 | 2.21 | 2.45 | 0.32 | A | 0.35 | A | A |
| 131 | 5.75 | 2.89 | 2.80 | 0.50 | C | 0.49 | A | C |
| 132 | 5.70 | 2.66 | 2.67 | 0.47 | C | 0.47 | A | C |
| 133 | 7.51 | 2.36 | 3.25 | 0.31 | A | 0.43 | A | A |
| 134 | 6.07 | 2.85 | 3.52 | 0.47 | C | 0.58 | A | C |
| 135 | 6.10 | 2.72 | 3.64 | 0.45 | C | 0.60 | A | C |
| 136 | 7.57 | 2.34 | 3.13 | 0.31 | A | 0.41 | A | A |
| 137 | 7.23 | 2.38 | 2.53 | 0.33 | A | 0.35 | A | A |
| 138 | 7.32 | 2.20 | 2.58 | 0.30 | A | 0.35 | A | A |
| 139 | 7.24 | 2.37 | 2.64 | 0.33 | A | 0.36 | A | A |
| 140 | 7.21 | 1.99 | 2.51 | 0.28 | A | 0.35 | A | A |

As shown in Tables 3-1 to 3-4, in Test No. 122, the short-circuit time ratio was equal to or larger than the threshold value 1, and thus the d/w was evaluated as D, and the overall evaluation was E of fail. In Tests No. 120, No. 124, and No. 128, the arc voltage/welding current was equal to or less than the threshold value 2, the h/w was evaluated as D, and the d/w was evaluated as A, and thus the overall evaluation was D of the pass line.

In the other tests, the short-circuit time ratio and the value of the arc voltage/welding current satisfied both the threshold value 1 and the threshold value 2, and thus the d/w was evaluated as C, B, and A from the group in which the short-circuit time ratio was close to the threshold value 1, and the h/w was evaluated as A, B, and C in descending order from the group having a large arc voltage/welding current.

Among them, in particular, in Tests No. 101, No. 102, No. 105, No. 106, Nos. 110 to 113, No. 125, No. 130, No. 133, and Nos.136 to 140, the d/w and the h/w were all evaluated as A, and as a result, the overall evaluation also was A of best quality.

Next, Tables 4-1 to 4-4, which are test results at a feeding speed of 10 m/min, will be described.

[Table 4-1]

| Test number | Set values | | | | | | Measurement results | | | Threshold value 1 | Frequency/ amplitude | Arc voltage/feeding speed | Arc voltage/welding current | Threshold value 2 |
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | | | | 0.0237 × (frequency/amplitude) - 0.376 |
|---|---|---|---|---|---|---|---|---|---|---|---|---|---|---|
| 141 | 10 | 90% | 15 | 50 | 70 | 5.3 | 253.8 | 24.3 | 0.277 | 0.319 | 13.208 | 2.430 | 0.096 | - |
| 142 | 10 | 90% | 15 | 50 | 70 | 5 | 254.9 | 24.5 | 0.242 | 0.319 | 14.000 | 2.450 | 0.096 | - |
| 143 | 10 | 90% | 15 | 50 | 100 | 5 | 252.2 | 24.5 | 0.238 | 0.319 | 20.000 | 2.450 | 0.097 | - |
| 144 | 10 | 90% | 15 | 50 | 100 | 4.8 | 255.4 | 24.4 | 0.251 | 0.319 | 20.833 | 2.440 | 0.096 | - |
| 145 | 10 | 90% | 25 | 50 | 70 | 5.3 | 227.8 | 24.3 | 0.314 | 0.319 | 13.208 | 2.430 | 0.107 | - |
| 146 | 10 | 90% | 25 | 50 | 70 | 5 | 225.2 | 24.3 | 0.295 | 0.319 | 14.000 | 2.430 | 0.108 | - |
| 147 | 10 | 90% | 25 | 50 | 100 | 5 | 227.1 | 24.4 | 0.305 | 0.319 | 20.000 | 2.440 | 0.107 | - |
| 148 | 10 | 90% | 25 | 50 | 100 | 4.8 | 225.4 | 24.4 | 0.294 | 0.319 | 20.833 | 2.440 | 0.108 | - |
| 149 | 10 | 100% | 15 | 50 | 70 | 5.3 | 257.0 | 28.4 | 0.161 | 0.319 | 13.208 | 2.840 | 0.111 | - |
| 150 | 10 | 100% | 15 | 50 | 70 | 5 | 255.7 | 28.1 | 0.149 | 0.319 | 14.000 | 2.810 | 0.110 | - |
| 151 | 10 | 100% | 15 | 50 | 100 | 5 | 257.8 | 28.5 | 0.177 | 0.319 | 20.000 | 2.850 | 0.111 | - |
| 152 | 10 | 100% | 15 | 50 | 100 | 4.8 | 255.3 | 28.4 | 0.181 | 0.319 | 20.833 | 2.840 | 0.111 | - |
| 153 | 10 | 100% | 25 | 50 | 70 | 5.3 | 225.2 | 28.7 | 0.175 | 0.319 | 13.208 | 2.870 | 0.127 | - |
| 154 | 10 | 100% | 25 | 50 | 70 | 5 | 228.6 | 28.1 | 0.178 | 0.319 | 14.000 | 2.810 | 0.123 | - |
| 155 | 10 | 100% | 25 | 50 | 100 | 5 | 225.8 | 28.3 | 0.207 | 0.319 | 20.000 | 2.830 | 0.125 | - |
| 156 | 10 | 100% | 25 | 50 | 100 | 4.8 | 225.0 | 28.4 | 0.197 | 0.319 | 20.833 | 2.840 | 0.126 | - |
| 157 | 10 | 110% | 15 | 50 | 70 | 5.3 | 264.4 | 32.4 | 0.088 | 0.319 | 13.208 | 3.240 | 0.123 | - |
| 158 | 10 | 110% | 15 | 50 | 70 | 5 | 264.1 | 31.9 | 0.103 | 0.319 | 14.000 | 3.190 | 0.121 | - |
| 159 | 10 | 110% | 15 | 50 | 100 | 5 | 263.1 | 32.7 | 0.087 | 0.319 | 20.000 | 3.270 | 0.124 | - |
| 160 | 10 | 110% | 15 | 50 | 100 | 4.8 | 264.5 | 32.3 | 0.074 | 0.319 | 20.833 | 3.230 | 0.122 | - |

| Test number | Set values | | | | | | Measurement results | | | Threshold value 1 | | | | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW + 0.249) | Frequency/ amplitude | Arc voltage/feeding speed | Arc voltage/welding current | 0.0237 × (frequency/amplitude) - 0.376 |
| 161 | 10 | 110% | 25 | 50 | 70 | 5.3 | 230.7 | 32.1 | 0.105 | 0.319 | 13.208 | 3.210 | 0.139 | - |
| 162 | 10 | 110% | 25 | 50 | 70 | 5 | 231.3 | 31.8 | 0.101 | 0.319 | 14.000 | 3.180 | 0.137 | - |
| 163 | 10 | 110% | 25 | 50 | 100 | 5 | 229.2 | 32.2 | 0.089 | 0.319 | 20.000 | 3.220 | 0.140 | - |
| 164 | 10 | 110% | 25 | 50 | 100 | 4.8 | 231.0 | 32.7 | 0.120 | 0.319 | 20.833 | 3.270 | 0.142 | - |

EP 4 509 254 A1

[Table 4-2]

| Test number | Set values | | | | | | Measurement results | | | Threshold value 1 | Frequency/ amplitude | Arc voltage/feeding speed | Arc voltage/welding current | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW +0.249) | | | | 0.0237 × (frequency/amplitude) - 0.376 |
| 165 | 10 | 100% | 15 | 50 | Uncertain | | 260.2 | 22.8 | 0.275 | 0.319 | - | 2.280 | 0.088 | - |
| 166 | 10 | 110% | 15 | 50 | Uncertain | | 242.5 | 24.9 | 0.200 | 0.319 | - | 2.490 | 0.103 | - |
| 167 | 10 | 100% | 25 | 50 | Uncertain | | 217.9 | 22.9 | 0.312 | 0.319 | - | 2.290 | 0.105 | - |
| 168 | 10 | 90% | 25 | 50 | Uncertain | | 226.3 | 20.7 | 0.422 | 0.319 | - | 2.070 | 0.091 | - |
| 169 | 10 | 110% | 25 | 50 | Uncertain | | 207.8 | 25.0 | 0.237 | 0.319 | - | 2.500 | 0.120 | - |
| 170 | 10 | 90% | 15 | 100 | 70 | 5.3 | 260.7 | 24.4 | 0.302 | 0.319 | 13.208 | 2.440 | 0.094 | -0.063 |
| 171 | 10 | 90% | 15 | 100 | 70 | 5 | 255.6 | 24.2 | 0.295 | 0.319 | 14.000 | 2.420 | 0.095 | -0.044 |
| 172 | 10 | 90% | 15 | 100 | 100 | 5 | 253.9 | 24.5 | 0.276 | 0.319 | 20.000 | 2.450 | 0.096 | 0.098 |
| 173 | 10 | 90% | 25 | 100 | 70 | 5.3 | 227.8 | 24.4 | 0.309 | 0.319 | 13.208 | 2.440 | 0.107 | -0.063 |
| 174 | 10 | 90% | 25 | 100 | 70 | 5 | 226.0 | 24.5 | 0.310 | 0.319 | 14.000 | 2.450 | 0.108 | -0.044 |
| 175 | 10 | 90% | 25 | 100 | 100 | 5 | 227.9 | 24.2 | 0.308 | 0.319 | 20.000 | 2.420 | 0.106 | 0.098 |
| 176 | 10 | 100% | 15 | 100 | 70 | 5.3 | 257.3 | 28.5 | 0.145 | 0.319 | 13.208 | 2.850 | 0.111 | -0.063 |
| 177 | 10 | 100% | 15 | 100 | 70 | 5 | 257.4 | 28.6 | 0.141 | 0.319 | 14.000 | 2.860 | 0.111 | -0.044 |
| 178 | 10 | 100% | 15 | 100 | 100 | 5 | 256.0 | 28.5 | 0.154 | 0.319 | 20.000 | 2.850 | 0.111 | 0.098 |
| 179 | 10 | 100% | 25 | 100 | 70 | 5.3 | 227.2 | 28.2 | 0.187 | 0.319 | 13.208 | 2.820 | 0.124 | -0.063 |
| 180 | 10 | 100% | 25 | 100 | 70 | 5 | 229.2 | 28.5 | 0.192 | 0.319 | 14.000 | 2.850 | 0.124 | -0.044 |
| 181 | 10 | 100% | 25 | 100 | 100 | 5 | 226.6 | 28.3 | 0.184 | 0.319 | 20.000 | 2.830 | 0.125 | 0.098 |
| 182 | 10 | 100% | 25 | 100 | 100 | 4.8 | 228.9 | 28.4 | 0.191 | 0.319 | 20.833 | 2.840 | 0.124 | 0.118 |
| 183 | 10 | 110% | 15 | 100 | 70 | 5.3 | 265.4 | 32.6 | 0.103 | 0.319 | 13.208 | 3.260 | 0.123 | -0.063 |
| 184 | 10 | 110% | 15 | 100 | 70 | 5 | 259.9 | 32.3 | 0.085 | 0.319 | 14.000 | 3.230 | 0.124 | -0.044 |

(continued)

| Test number | Set values | | | | | | Measurement results | | | Threshold value 1 | Frequency/ amplitude | Arc voltage/feeding speed | Arc voltage/welding current | Threshold value 2 |
|---|---|---|---|---|---|---|---|---|---|---|---|---|---|---|
| | Feeding speed [mpm] | Voltage | Protrusion [mm] | Travel speed [cmpm] | Frequency f [Hz] | Amplitude Wf [mm] | Average current [A] | Average voltage [V] | Short-circuit time ratio (0.295 or less) | Threshold value of short-circuit time ratio (0.007 × FW +0.249) | | | | 0.0237 × (frequency/amplitude) - 0.376 |
| 185 | 10 | 110% | 15 | 100 | 100 | 5 | 257.4 | 32.5 | 0.057 | 0.319 | 20.000 | 3.250 | 0.126 | 0.098 |
| 186 | 10 | 110% | 15 | 100 | 100 | 4.8 | 260.4 | 32.8 | 0.029 | 0.319 | 20.833 | 3.280 | 0.126 | 0.118 |
| 187 | 10 | 110% | 25 | 100 | 70 | 5.3 | 233.1 | 32.4 | 0.119 | 0.319 | 13.208 | 3.240 | 0.139 | -0.063 |
| 188 | 10 | 110% | 25 | 100 | 70 | 5 | 228.8 | 34.7 | 0.025 | 0.319 | 14.000 | 3.470 | 0.152 | -0.044 |
| 189 | 10 | 110% | 25 | 100 | 100 | 5 | 238.2 | 36.7 | 0.106 | 0.319 | 20.000 | 3.670 | 0.154 | 0.098 |
| 190 | 10 | 110% | 25 | 100 | 100 | 4.8 | 230.4 | 32.4 | 0.124 | 0.319 | 20.833 | 3.240 | 0.141 | 0.118 |
| 191 | 10 | 100% | 25 | 100 | Uncertain | | 222.8 | 22.8 | 0.342 | 0.319 | - | 2.280 | 0.102 | - |
| 192 | 10 | 90% | 25 | 100 | Uncertain | | 224.8 | 20.6 | 0.406 | 0.319 | - | 2.060 | 0.092 | - |

40

[Table 4-3]

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 141 | 9.89 | 3.53 | 3.89 | 0.36 | B | 0.39 | A | B |
| 142 | 9.12 | 3.64 | 4.16 | 0.40 | B | 0.46 | A | B |
| 143 | 9.10 | 3.71 | 4.21 | 0.41 | C | 0.46 | A | B |
| 144 | 10.03 | 3.99 | 4.96 | 0.40 | B | 0.49 | A | B |
| 145 | 9.53 | 3.68 | 3.33 | 0.39 | B | 0.35 | A | B |
| 146 | 9.45 | 3.63 | 3.03 | 0.38 | B | 0.32 | B | B |
| 147 | 8.90 | 3.80 | 3.38 | 0.43 | C | 0.38 | A | B |
| 148 | 8.74 | 3.72 | 3.37 | 0.43 | C | 0.39 | A | B |
| 149 | 10.37 | 3.61 | 4.43 | 0.35 | A | 0.43 | A | A |
| 150 | 9.89 | 3.43 | 4.69 | 0.35 | A | 0.47 | A | A |
| 151 | 9.64 | 3.50 | 4.72 | 0.36 | B | 0.49 | A | B |
| 152 | 9.48 | 3.59 | 4.88 | 0.38 | B | 0.51 | A | B |
| 153 | 10.19 | 3.58 | 3.67 | 0.35 | A | 0.36 | A | A |
| 154 | 9.90 | 3.58 | 3.82 | 0.36 | B | 0.39 | A | B |
| 155 | 9.22 | 3.71 | 3.95 | 0.40 | B | 0.43 | A | B |
| 156 | 9.34 | 3.65 | 3.88 | 0.39 | B | 0.42 | A | B |
| 157 | 9.98 | 3.59 | 5.04 | 0.36 | B | 0.51 | A | B |
| 158 | 9.74 | 3.10 | 4.83 | 0.32 | A | 0.50 | A | A |
| 159 | 9.64 | 3.48 | 4.94 | 0.36 | B | 0.51 | A | B |
| 160 | 9.70 | 3.46 | 5.13 | 0.36 | B | 0.53 | A | B |
| 161 | 10.02 | 3.78 | 4.44 | 0.38 | B | 0.44 | A | B |
| 162 | 9.38 | 2.91 | 4.52 | 0.31 | A | 0.48 | A | A |
| 163 | 9.48 | 3.64 | 4.40 | 0.38 | B | 0.46 | A | B |
| 164 | 9.39 | 3.58 | 4.43 | 0.38 | B | 0.47 | A | B |

[Table 4-4]

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 165 | 9.17 | 3.64 | 3.89 | 0.40 | B | 0.42 | A | B |
| 166 | 8.67 | 3.64 | 3.64 | 0.42 | C | 0.42 | A | B |
| 167 | 8.37 | 3.67 | 2.55 | 0.44 | C | 0.30 | B | B |
| 168 | 8.06 | 3.65 | 2.18 | 0.45 | C | 0.27 | D | E |
| 169 | 8.88 | 3.51 | 2.67 | 0.40 | B | 0.30 | B | B |
| 170 | 6.62 | 2.46 | 3.06 | 0.37 | B | 0.46 | A | B |
| 171 | 6.46 | 2.72 | 3.09 | 0.42 | C | 0.48 | A | B |
| 172 | 5.28 | 2.98 | 3.23 | 0.56 | D | 0.61 | A | D |
| 173 | 6.69 | 2.57 | 2.21 | 0.38 | B | 0.33 | A | B |

(continued)

| Test number | Welding results | | | Evaluation | | | | Overall evaluation |
|---|---|---|---|---|---|---|---|---|
| | Bead width w [mm] | Weld reinforcement height h [mm] | Penetration depth d [mm] | h/w | | d/w | | |
| 174 | 5.98 | 2.96 | 2.30 | 0.49 | C | 0.38 | A | B |
| 175 | 6.26 | 2.45 | 2.15 | 0.39 | B | 0.34 | A | B |
| 176 | 6.13 | 3.02 | 3.59 | 0.49 | C | 0.59 | A | B |
| 177 | 6.66 | 2.60 | 3.31 | 0.39 | B | 0.50 | A | B |
| 178 | 6.21 | 2.92 | 3.42 | 0.47 | C | 0.55 | A | B |
| 179 | 6.61 | 2.47 | 2.78 | 0.37 | B | 0.42 | A | B |
| 180 | 7.17 | 2.42 | 2.53 | 0.34 | A | 0.35 | A | B |
| 181 | 6.40 | 2.51 | 2.79 | 0.39 | B | 0.44 | A | B |
| 182 | 7.07 | 2.71 | 2.62 | 0.38 | B | 0.37 | A | B |
| 183 | 7.80 | 2.59 | 3.32 | 0.33 | A | 0.43 | A | B |
| 184 | 6.61 | 2.98 | 3.67 | 0.45 | C | 0.56 | A | B |
| 185 | 6.30 | 2.99 | 3.85 | 0.47 | C | 0.61 | A | B |
| 186 | 6.07 | 2.95 | 3.98 | 0.49 | C | 0.66 | A | B |
| 187 | 6.90 | 2.50 | 2.98 | 0.36 | B | 0.43 | A | B |
| 188 | 6.54 | 2.74 | 3.06 | 0.42 | C | 0.47 | A | B |
| 189 | 5.98 | 2.92 | 3.14 | 0.49 | C | 0.53 | A | B |
| 190 | 7.49 | 2.59 | 2.92 | 0.35 | A | 0.39 | A | A |
| 191 | 6.62 | 2.46 | 1.82 | 0.37 | B | 0.27 | D | E |
| 192 | 5.99 | 2.77 | 1.57 | 0.46 | C | 0.26 | D | E |

As shown in Tables 4-1 to 4-4, in Tests No. 168, No. 191, and No. 192, the short-circuit time ratio exceeded the threshold value 1, and thus the d/w was evaluated as D, and as a result, the overall evaluation also was E of fail. In Test No. 172, the value of the arc voltage/welding current was equal to or less than the threshold value 2, the h/w was evaluated as D, and the d/w was evaluated as A, and thus the overall evaluation was D of the pass line.

In the other tests, the short-circuit time ratio and the value of the arc voltage/welding current satisfied both the threshold value 1 and the threshold value 2, and thus the d/w was evaluated as A and B from the group in which the short-circuit time ratio was close to the threshold value 1, and the h/w was evaluated as B and C from the group having a large arc voltage/welding current.

Among them, in particular, in Tests No. 149, No. 150, No. 153, No. 158, No. 162, and No. 190, the d/w and the h/w were all evaluated as A, and as a result, the overall evaluation was A of best quality.

The present invention is not limited to the above embodiments and examples, and modifications, improvements, and the like can be made as appropriate.

As described above, the present description discloses the following matters.

(1) A method for controlling gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the method including:

when there are one or more cycles including an arc period and a short-circuit period within a predetermined time, a short-circuit time ratio determination step of determining a ratio of the short-circuit period to the predetermined time; and

a welding condition determination step of setting or correcting a welding condition so that the ratio of the short-circuit period determined in the short-circuit time ratio determination step is at least equal to or less than a predetermined threshold value or a calculated threshold value, or equal to a predetermined target value or a calculated target value.

According to the configuration, an excellent bead shape and an optimum penetration performance according to a situation can be obtained regardless of a travel speed in the welding of the thin plate.

(2) The method for controlling gas metal arc welding according to (1), further including:

a step of determining the threshold value or the target value based on a predetermined item of welding information, wherein

the item of the welding information is selected from at least one of a welding wire type, a gas composition, a welding wire diameter, a plate thickness, a feeding speed set value FW, or a travel speed.

According to the configuration, the threshold value or the target value of the short-circuit period ratio can be determined based on at least one of the welding wire type, the gas composition, the welding wire diameter, the plate thickness, the feeding speed set value FW, or the travel speed.

(3) The method for controlling gas metal arc welding according to (2), in which

when the threshold value is determined, the threshold value is calculated based on the following expression (1) related to at least the feeding speed set value FW.

$$0.007 \times \mathrm{FW} + 0.249 ... (1)$$

According to the configuration, the threshold value of the short-circuit period ratio can be obtained according to Expression (1) related to the feeding speed set value Fw.

(4) The method for controlling gas metal arc welding according to any one of (1) to (3), in which

in the welding condition determination step,

at least a frequency f of the one cycle, an amplitude Wf of the welding wire at the time of forward feeding or backward feeding, a welding current, and an arc voltage are set as items of the welding condition, and

in a case of high-speed welding at a travel speed of 80 cm/min or higher, the welding condition is set or corrected so that a set value or a detected value of the frequency f, the amplitude Wf, the welding current, and the arc voltage satisfies the following equation (2).

$$(\text{arc voltage}/(\text{welding current}) \geq 0.0237 \times (\text{frequency/amplitude}) - 0.376 ... (2)$$

According to the configuration, in the case of high-speed welding at the travel speed of 80 cm/min or higher, by setting or correcting various welding conditions so that the value of the arc voltage/welding current is equal to or larger than the value of $0.0237 \times$ (frequency/amplitude ) - 0.376, (arc voltage)/(welding current) can be determined, and the excellent bead shape can be obtained.

(5) The method for controlling gas metal arc welding according to (4), in which

the welding condition is set or corrected so that the set value or the detected value of the frequency f is within a range of 50 to 150, the set value or the detected value of the amplitude Wf is within a range of 3.0 to 8.75, and the frequency f/the amplitude Wf satisfies 10 to 25.

According to the configuration, better flatness of the bead is obtained by setting or correcting the welding condition so that the set value or the detected value of the frequency is within the range of 50 to 150, the set value or the detected value of the amplitude is within the range of 3.0 to 8.75, and the frequency/the amplitude satisfies 10 to 25.

(6) The method for controlling gas metal arc welding according to (4) or (5), in which

the welding condition is set or corrected so that an average value is used as the set value or the detected value of the welding current or the arc voltage, and (arc voltage)/(welding current) satisfies 0.05V/100A to 20V/100A.

According to the configuration, the better flatness of the bead can be obtained by setting or correcting the welding condition so that (arc voltage)/(welding current) satisfies 0.05V/100A to 20V/100A.

(7) The method for controlling gas metal arc welding according to any one of (1) to (6), in which

in the welding condition determination step,
as the welding condition to be set or corrected,
the current non-reduction period $T_{IP}$ includes at least two welding current set values $I_{P1}$ and $I_{P2}$, and
when a position of the welding wire at a set feeding speed is set to 0 deg as a reference during the forward feeding period $T_P$,
an end part position of a range of the welding current set value $I_{P1}$ is set or corrected in a range of 20 deg or less, and
an end part position of a range of the welding current set value $I_{P2}$ is set or corrected in a range of 135 deg to 220 deg.
According to the configuration, by setting the end part position of the range of the first welding current set value $I_{P1}$ in the range of 20 deg or less, it is possible to reduce the shaking of the droplet started to be formed, and to maintain more stable detachment. In addition, by setting the end part position of the range of the second welding current set value $I_{P2}$ in the range of 135 deg to 220 deg, an arc pressure can effectively act on the molten pool, and a stable penetration depth can be obtained.

(8) The method for controlling gas metal arc welding according to (7), in which

as the welding condition to be set or corrected,
an end part of the range of the welding current set value $I_{P2}$ is set as an end part of the current non-reduction period $T_{IP}$, and
when the end part position of the range of the welding current set value $I_{P2}$ is set at X deg,
an end part position of the current reduction period $T_{IB}$ is set or corrected in a range of (X + 100) deg to (X + 220) deg.
According to the configuration, the timing at which the most inertial force is exerted is included in the current reduction period $T_{IB}$, and thus the droplet detachment can be stabilized.

(9) The method for controlling gas metal arc welding according to (7) or (8), in which

a set current of the welding current set value $I_{P1}$ is 300 A to 600 A, and a set voltage of the welding current set value $I_{P1}$ is 20 V to 45 V, and
a set current of the welding current set value $I_{P2}$ is 350 A to 650 A, and a set voltage of the welding current set value $I_{P2}$ is 20 V to 50 V.
According to the configuration, it is possible to further enhance an effect obtained by providing the first welding current set value $I_{P1}$ and the second welding current set value $I_{P2}$.

(10) The method for controlling gas metal arc welding according to any one of (1) to (9), in which

the feeding and welding current control is performed such that the current non-reduction period $T_{IP}$ occupies 2/3 or more of the forward feeding period $T_P$.
According to the configuration, in the welding of the thin plate in an arc welding method in which the forward feeding and the backward feeding of the tip of the wire are periodically repeated, it is possible to achieve both the stable penetration depth and the reduction of the amount of spatter.

(11) The method for controlling gas metal arc welding according to any one of (1) to (10), in which

for each item of the welding information selected from at least one of the welding wire type, the gas composition, the welding wire diameter, the plate thickness, the feeding speed set value, or the travel speed,
a database obtained by associating the ratio of the short-circuit period with the items of the welding condition is provided, and
in the welding condition determination step, the welding condition is determined based on the database and the item of the welding information input in advance, and the welding condition is set or corrected.
According to the configuration, it is possible to determine an appropriate threshold value of the short-circuit time ratio by determining the welding condition based on the item of the welding information input in advance and the database and setting or correcting the welding condition, and it is possible to achieve both the stable penetration depth and the reduction of the amount of spatter in the welding of the thin plate.

(12) The method for controlling gas metal arc welding according to (11), in which

the item of the welding condition includes at least one of
the frequency f when the forward feeding period $T_P$ and the backward feeding period $T_N$ of the welding wire are defined as one cycle,
the amplitude Wf of the welding wire at the time of forward feeding or backward feeding,
a welding current set value during the current non-reduction period $T_{IP}$,
an arc voltage set value during the current non-reduction period $T_{IP}$,
a welding current set value during the current reduction period $T_{IB}$,
an arc voltage set value during the current reduction period $T_{IB}$,
wire position information (Deg5) for ending the current non-reduction period $T_{IP}$,
wire position information (DegTa1) for ending the current reduction period, or
a ratio (PFR) of the forward feeding period $T_P$ to the backward feeding period $T_N$.
According to the configuration, it is possible to determine an appropriate threshold value of the short-circuit time ratio according to the welding condition, and it is possible to achieve both the stable penetration depth and the reduction of the amount of spatter in the welding of the thin plate.

(13) The method for controlling gas metal arc welding according to (11) or (12), further including:

a step of detecting at least an arc voltage during welding, in which
in the short-circuit time ratio determination step, a period during which the arc voltage is equal to or less than a predetermined voltage value is calculated as the short-circuit period based on a detected value of the arc voltage, and the short-circuit time ratio is determined based on the calculated short-circuit period, and
in the welding condition determination step, the welding condition is corrected so that the short-circuit time ratio is at least equal to or less than a predetermined threshold value or a calculated threshold value, or equal to a predetermined target value or a calculated target value.
According to the configuration, the period during which the arc voltage is equal to or less than the predetermined voltage value is calculated as the short-circuit period based on the detected value of the arc voltage, and the short-circuit time ratio can be determined based on the calculated short-circuit period.

(14) A method for setting a welding condition in gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the method including:

when there are one or more cycles including an arc period and a short-circuit period within a predetermined time, determining a ratio of the short-circuit period to the predetermined time; and
setting the welding condition so that the determined ratio of the short-circuit period is at least equal to or less than a predetermined threshold value or a calculated threshold value, or equal to a predetermined target value or a calculated target value.
According to the configuration, the excellent bead shape and the optimum penetration performance according to a situation can be obtained regardless of the travel speed in the welding of the thin plate.

(15) A welding control device in gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the device including:

when there are one or more cycles including an arc period and a short-circuit period within a predetermined time, a short-circuit time ratio determination unit configured to determine a ratio of the short-circuit period to the predetermined time; and
a welding condition determination unit configured to set or correct a welding condition so that the ratio of the short-circuit period determined by the short-circuit time ratio determination unit is at least equal to or less than a predetermined threshold value or a calculated threshold value, or equal to a predetermined target value or a calculated target value.

According to the configuration, the excellent bead shape and the optimum penetration performance according to a situation can be obtained regardless of the travel speed in the welding of the thin plate.

(16) A welding power supply including: the welding control device according to (15).

According to the configuration, the excellent bead shape and the optimum penetration performance according to a situation can be obtained regardless of the travel speed in the welding of the thin plate.

(17) A welding system including: the welding power supply according to (16).

According to the configuration, the excellent bead shape and the optimum penetration performance according to a situation can be obtained regardless of the travel speed in the welding of the thin plate.

(18) A program causing a computer of a welding system including at least a welding control device to execute a function of the welding control device, in which

in gas metal arc welding using a shielding gas containing 30% or more of $CO_2$ and using a thin plate as a material to be welded, the welding control device performs feeding and welding current control by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, and the welding control device includes:

when there are one or more cycles including an arc period and a short-circuit period within a predetermined time,

a short-circuit time ratio determination step of determining a ratio of the short-circuit period to the predetermined time; and

a welding condition determination step of setting or correcting a welding condition so that the ratio of the short-circuit period determined in the short-circuit time ratio determination step is at least equal to or less than a predetermined threshold value or a calculated threshold value, or equal to a predetermined target value or a calculated target value.

According to the configuration, the excellent bead shape and the optimum penetration performance according to a situation can be obtained regardless of the travel speed in the welding of the thin plate.

(19) A metal arc welding method using a method for controlling gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the welding method including:

when there are one or more cycles including an arc period and a short-circuit period within a predetermined time, setting or correcting a welding condition so that a ratio of the short-circuit period to the predetermined time is equal to or less than a value of the following expression (1) related to a feeding speed set value FW.

$$0.007 \times FW + 0.249...(1)$$

According to the configuration, the excellent bead shape and the optimum penetration performance according to a situation can be obtained regardless of the travel speed in the welding of the thin plate.

(20) An additive manufacturing method using a method for controlling gas metal arc welding, the additive manufacturing method using the gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the additive manufacturing method including:

when there are one or more cycles including an arc period and a short-circuit period within a predetermined time, setting or correcting a welding condition so that a ratio of the short-circuit period to the predetermined time is equal to or less than a value of the following expression (1) related to a feeding speed set value FW.

$$0.007 \times FW + 0.249...(1)$$

According to the configuration, in the additive manufacturing method to which the gas metal arc welding of the arc welding method in which the forward feeding and the backward feeding of the tip of the wire are periodically repeated is applied, the excellent bead shape and the optimum penetration performance according to a situation can be obtained regardless of the travel speed.

Although various embodiments are described above, it is needless to say that the present invention is not limited to these embodiments. It is apparent that those skilled in the art can conceive of various modifications and alterations within the scope described in the claims, and it is understood that such modifications and alterations naturally fall within the technical scope of the present invention. In addition, the respective constituent elements in the above embodiments may be freely combined without departing from the gist of the invention.

The present application is based on Japanese Patent Application No. 2022-080526 filed on May 16, 2022, the contents of which are incorporated herein by reference.

REFERENCE SIGNS LIST

50: welding system
100: welding wire
120: welding control device (robot control device)
140: welding power supply
d: penetration depth
f: frequency
h: bead height
I: average welding current
$I_{P1}$: welding current set value
$I_{P2}$: welding current set value
$T_C$: current control section
Tf: cycle
$T_{IB}$: current reduction period
$T_{IP}$: current non-reduction period
$T_N$: backward feeding period
$T_P$: forward feeding period
w: bead width
Wf: amplitude

**Claims**

1. A method for controlling gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the method comprising:

   when there are one or more cycles including an arc period and a short-circuit period within a predetermined time, a short-circuit time ratio determination step of determining a ratio of the short-circuit period to the predetermined time; and
   a welding condition determination step of setting or correcting a welding condition so that the ratio of the short-circuit period determined in the short-circuit time ratio determination step is at least equal to or less than a predetermined threshold value or a calculated threshold value, or equal to a predetermined target value or a calculated target value.

2. The method for controlling gas metal arc welding according to claim 1, further comprising:

a step of determining the threshold value or the target value based on a predetermined item of welding information, wherein
the item of the welding information is selected from at least one of a welding wire type, a gas composition, a welding wire diameter, a plate thickness, a feeding speed set value FW, or a travel speed.

3. The method for controlling gas metal arc welding according to claim 2, wherein
when the threshold value is determined, the threshold value is calculated based on the following expression (1) related to at least the feeding speed set value FW.

$$0.007 \times \mathrm{FW} + 0.249...(1)$$

4. The method for controlling gas metal arc welding according to any one of claims 1 to 3, wherein

in the welding condition determination step,
at least a frequency f of the one cycle, an amplitude Wf of the welding wire at the time of forward feeding or backward feeding, a welding current, and an arc voltage are set as items of the welding condition, and
in a case of high-speed welding at a travel speed of 80 cm/min or higher, the welding condition is set or corrected so that a set value or a detected value of the frequency f, the amplitude Wf, the welding current, and the arc voltage satisfies the following equation (2).

$$(\text{arc voltage}/(\text{welding current}) \geq 0.0237 \times (\text{frequency}/\text{amplitude}) - 0.376...(2)$$

5. The method for controlling gas metal arc welding according to claim 4, wherein
the welding condition is set or corrected so that the set value or the detected value of the frequency f is within a range of 50 to 150, the set value or the detected value of the amplitude Wf is within a range of 3.0 to 8.75, and the frequency f/the amplitude Wf satisfies 10 to 25.

6. The method for controlling gas metal arc welding according to claim 4, wherein
the welding condition is set or corrected so that an average value is used as the set value or the detected value of the welding current or the arc voltage, and (arc voltage)/(welding current) satisfies 0.05V/100A to 20V/100A.

7. The method for controlling gas metal arc welding according to any one of claims 1 to 3, wherein

in the welding condition determination step,
as the welding condition to be set or corrected,
the current non-reduction period $T_{IP}$ includes at least two welding current set values $I_{P1}$ and $I_{P2}$, and when a position of the welding wire at a set feeding speed is set to 0 deg as a reference during the forward feeding period $T_P$,
an end part position of a range of the welding current set value $I_{P1}$ is set or corrected in a range of 20 deg or less, and
an end part position of a range of the welding current set value $I_{P2}$ is set or corrected in a range of 135 deg to 220 deg.

8. The method for controlling gas metal arc welding according to claim 7, wherein

as the welding condition to be set or corrected,
an end part of the range of the welding current set value $I_{P2}$ is set as an end part of the current non-reduction period $T_{IP}$, and
when the end part position of the range of the welding current set value $I_{P2}$ is set at X deg,
an end part position of the current reduction period $T_{IB}$ is set or corrected in a range of (X + 100) deg to (X + 220) deg.

9. The method for controlling gas metal arc welding according to claim 7, wherein

a set current of the welding current set value $I_{P1}$ is 300 A to 600 A, and a set voltage of the welding current set value $I_{P1}$ is 20 V to 45 V, and
a set current of the welding current set value $I_{P2}$ is 350 A to 650 A, and a set voltage of the welding current set value

$I_{P2}$ is 20 V to 50 V.

10. The method for controlling gas metal arc welding according to any one of claims 1 to 3, wherein
the feeding and welding current control is performed such that the current non-reduction period $T_{IP}$ occupies 2/3 or more of the forward feeding period $T_P$.

11. The method for controlling gas metal arc welding according to any one of claims 1 to 3, wherein

for each item of the welding information selected from at least one of the welding wire type, the gas composition, the welding wire diameter, the plate thickness, the feeding speed set value, or the travel speed, a database obtained by associating the ratio of the short-circuit period with the items of the welding condition is provided, and
in the welding condition determination step, the welding condition is determined based on the database and the item of the welding information input in advance, and the welding condition is set or corrected.

12. The method for controlling gas metal arc welding according to claim 11, wherein
the item of the welding condition includes at least one of

the frequency f when the forward feeding period $T_P$ and the backward feeding period $T_N$ of the welding wire are defined as one cycle,
the amplitude Wf of the welding wire at the time of forward feeding or backward feeding,
a welding current set value during the current non-reduction period $T_{IP}$,
an arc voltage set value during the current non-reduction period $T_{IP}$,
a welding current set value during the current reduction period $T_{IB}$,
an arc voltage set value during the current reduction period $T_{IB}$,
wire position information (Deg5) for ending the current non-reduction period $T_{IP}$,
wire position information (DegTa1) for ending the current reduction period, or
a ratio (PFR) of the forward feeding period $T_P$ to the backward feeding period $T_N$.

13. The method for controlling gas metal arc welding according to claim 11, further comprising:

a step of detecting at least an arc voltage during welding, wherein
in the short-circuit time ratio determination step, a period during which the arc voltage is equal to or less than a predetermined voltage value is calculated as the short-circuit period based on a detected value of the arc voltage, and the short-circuit time ratio is determined based on the calculated short-circuit period, and
in the welding condition determination step, the welding condition is corrected so that the short-circuit time ratio is at least equal to or less than a predetermined threshold value or a calculated threshold value, or equal to a predetermined target value or a calculated target value.

14. The method for controlling gas metal arc welding according to claim 12, further comprising:

a step of detecting at least an arc voltage during welding, wherein
in the short-circuit time ratio determination step, a period during which the arc voltage is equal to or less than a predetermined voltage value is calculated as the short-circuit period based on a detected value of the arc voltage, and the short-circuit time ratio is determined based on the calculated short-circuit period, and
in the welding condition determination step, the welding condition is corrected so that the short-circuit time ratio is at least equal to or less than a predetermined threshold value or a calculated threshold value, or equal to a predetermined target value or a calculated target value.

15. A method for setting a welding condition in gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the method comprising:

when there are one or more cycles including an arc period and a short-circuit period within a predetermined time, determining a ratio of the short-circuit period to the predetermined time; and

setting the welding condition so that the determined ratio of the short-circuit period is at least equal to or less than a predetermined threshold value or a calculated threshold value, or equal to a predetermined target value or a calculated target value.

16. A welding control device in gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the device comprising:

when there are one or more cycles including an arc period and a short-circuit period within a predetermined time, a short-circuit time ratio determination unit configured to determine a ratio of the short-circuit period to the predetermined time; and
a welding condition determination unit configured to set or correct a welding condition so that the ratio of the short-circuit period determined by the short-circuit time ratio determination unit is at least equal to or less than a predetermined threshold value or a calculated threshold value, or equal to a predetermined target value or a calculated target value.

17. A welding power supply comprising: the welding control device according to claim 16.

18. A welding system comprising: the welding power supply according to claim 17.

19. A program causing a computer of a welding system including at least a welding control device to execute a function of the welding control device, wherein

in gas metal arc welding using a shielding gas containing 30% or more of $CO_2$ and using a thin plate as a material to be welded, the welding control device performs feeding and welding current control by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, and the welding control device includes:

when there are one or more cycles including an arc period and a short-circuit period within a predetermined time,
a short-circuit time ratio determination step of determining a ratio of the short-circuit period to the predetermined time; and
a welding condition determination step of setting or correcting a welding condition so that the ratio of the short-circuit period determined in the short-circuit time ratio determination step is at least equal to or less than a predetermined threshold value or a calculated threshold value, or equal to a predetermined target value or a calculated target value.

20. A metal arc welding method using a method for controlling gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the welding method comprising:

when there are one or more cycles including an arc period and a short-circuit period within a predetermined time, setting or correcting a welding condition so that a ratio of the short-circuit period to the predetermined time is equal to or less than a value of the following expression (1) related to a feeding speed set value FW.

$$0.007 \times FW + 0.249...(1)$$

21. An additive manufacturing method using a method for controlling gas metal arc welding, the additive manufacturing method using the gas metal arc welding using a shielding gas containing 30% or more of $CO_2$ and using a thin plate as a material to be welded, in which feeding and welding current control are performed by switching a welding current to at least a current non-reduction period $T_{IP}$ or a current reduction period $T_{IB}$ based on at least a feeding speed signal or a tip position of a welding wire such that a tip of the welding wire is fed toward a base metal with a periodic switching between a forward feeding period $T_P$ and a backward feeding period $T_N$ as one cycle, the additive manufacturing method comprising:

when there are one or more cycles including an arc period and a short-circuit period within a predetermined time, setting or correcting a welding condition so that a ratio of the short-circuit period to the predetermined time is equal to or less than a value of the following expression (1) related to a feeding speed set value FW.

$$0.007 \times FW + 0.249...(1)$$

FIG. 1

50

110

120

140

111

100

WORKPIECE 200

150

EP 4 509 254 A1

FIG. 2

(CONT.)

EP 4 509 254 A1

(FIG. 2 CONTINUED)

## FIG. 3

## FIG. 4

FIG. 5

## FIG. 6

BACKWARD FEEDING PERIOD $T_N$

FORWARD FEEDING PERIOD $T_P$

T0      T1      T2      T3      T4 (T0)      T1

t1
t2

CURRENT DETECTION SIGNAL Io

t1'
t2'

$I_{P-AVG}$

$I_{B-AVG}$

CURRENT NON-REDUCTION PERIOD $T_{IP}$

CURRENT REDUCTION PERIOD $T_{IB}$

CURRENT NON-REDUCTION PERIOD $T_{IP}$

CURRENT REDUCTION PERIOD $T_{IB}$

CURRENT NON-REDUCTION PERIOD $T_{IP}$

EP 4 509 254 A1

*FIG. 7*

*FIG. 8*

## FIG. 9

## FIG. 10

# FIG. 11

**ROBOT CONTROL DEVICE 120**

START

RECEIVE TEACHING PROGRAM, VARIOUS SET VALUES, AND INSTRUCTION FOR STARTING WELDING — S1101

START WELDING (ARC ON) — S1102

EXECUTE WELDING CONTROL — S1104

END WELDING (ARC OFF) — S1108

PROGRAM ENDS — S1110

NO

YES

END

**WELDING POWER SUPPLY 140**

START

RECEIVE COMMAND AND START WELDING — S1103

EXECUTE POWER SUPPLY CONTROL — S1105

MEASURE SHORT-CIRCUIT TIME — S1106

IS SHORT-CIRCUIT TIME RATIO EQUAL TO OR LESS THAN THRESHOLD VALUE OR IS EQUAL TO TARGET VALUE? — S1107

NO

YES

RECEIVE COMMAND AND END WELDING — S1109

END

## FIG. 12

*FIG. 13*

## INTERNATIONAL SEARCH REPORT

International application No.

**PCT/JP2023/016545**

### A.    CLASSIFICATION OF SUBJECT MATTER

**B23K 9/073**(2006.01)i; **B23K 9/12**(2006.01)i
FI:    B23K9/073 545; B23K9/12 305

According to International Patent Classification (IPC) or to both national classification and IPC

### B.    FIELDS SEARCHED

Minimum documentation searched (classification system followed by classification symbols)

B23K9/073; B23K9/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 2016-87609 A (DAIHEN CORP.) 23 May 2016 (2016-05-23)<br>claims 1-2, paragraphs [0003], [0030]-[0041], fig. 1-3 | 1-21 |
| A | WO 2020/067074 A1 (KK KOBE SEIKO SHO) 02 April 2020 (2020-04-02)<br>claims 1-17, paragraph [0018], fig. 1-10 | 1-21 |
| A | WO 2013/008394 A1 (PANASONIC CORP.) 17 January 2013 (2013-01-17)<br>claims 1-9, fig. 1-8 | 1-21 |
| A | JP 2020-192594 A (NIPPON STEEL STAINLESS STEEL CORP.) 03 December 2020<br>(2020-12-03)<br>claim 3, paragraphs [0049]-[0052] | 1-21 |

☐ Further documents are listed in the continuation of Box C.       ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **03 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/016545**

| Patent document cited in search report | | | Publication date (day/month/year) | Patent family member(s) | | | Publication date (day/month/year) |
|---|---|---|---|---|---|---|---|
| JP | 2016-87609 | A | 23 May 2016 | (Family: none) | | | |
| WO | 2020/067074 | A1 | 02 April 2020 | US claims 1-18, paragraphs [0041]-[0043], fig. 1-10 EP KR CN | 2022/0032388 3858530 10-2021-0039482 112770859 | A1 A1 A A | |
| WO | 2013/008394 | A1 | 17 January 2013 | US claims 1-13, fig. 1-8 EP CN | 2013/0299476 2732901 103260807 | A1 A1 A | |
| JP | 2020-192594 | A | 03 December 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017169899 A
- JP 2022080526 A